# EUROPÄISCHE PATENTSCHRIFT

(11) **EP 4 592 944 B1**
(45) Veröffentlichungstag und Bekanntmachung des Hinweises auf die Patenterteilung: **08.04.2026**
(21) Anmeldenummer: 24154145.7
(22) Anmeldetag: 26.01.2024
(51) Int. Cl.: G06T 7/00, G06N 3/045, G06N 3/08

(54) **BILDAUFBEREITUNGSVORRICHTUNG ZUR UNTERSTÜTZUNG EINER QUALITATIVEN UND/ODER QUANTITATIVEN BEWERTUNG DER QUALITÄT EINER CRIMPVERBINDUNG, BILDAUSWERTEVORRICHTUNG UND FERTIGUNGSFREIGABESYSTEM FÜR EINE CRIMPVORRICHTUNG**
IMAGE PROCESSING DEVICE FOR SUPPORTING QUALITATIVE AND/OR QUANTITATIVE EVALUATION OF QUALITY OF CRIMP CONNECTION, IMAGE EVALUATING DEVICE, AND PRODUCTION RELEASE SYSTEM FOR CRIMPING DEVICE
DISPOSITIF DE TRAITEMENT D'IMAGE POUR PRENDRE EN CHARGE UNE ÉVALUATION QUALITATIVE ET/OU QUANTITATIVE DE LA QUALITÉ D'UNE LIAISON SERTIE, DISPOSITIF D'ÉVALUATION D'IMAGE ET SYSTÈME DE LIBÉRATION DE FABRICATION POUR DISPOSITIF DE SERTISSAGE

(43) Veröffentlichungstag der Anmeldung: 30.07.2025
(73) Patentinhaber: MD Elektronik GmbH, 84478 Waldkraiburg (DE)
(72) Erfinder: OHNI, Josef, 84559 Kraiburg am Inn (DE); HOFINGER, Peter, 84137 Vilsbiburg (DE)
(74) Vertreter: Kehl, Ascherl, Liebhoff & Ettmayr Patentanwälte Partnerschaft mbB

(56) Entgegenhaltungen:
- EP-A1- 2 173 015
- EP-A1- 3 109 624
- CN-A- 111 665 267
- US-A1- 2023 245 299
- US-B2- 7 174 324
- GIANG NGUYEN HUONG ET AL: "Deep learning-based automated optical inspection system for crimp connections", 2020 10TH INTERNATIONAL ELECTRIC DRIVES PRODUCTION CONFERENCE (EDPC), IEEE, 8 December 2020 (2020-12-08), pages 1 - 5, XP033892793, [retrieved on 20210326], DOI: 10.1109/EDPC51184.2020.9388203

## Beschreibung

### Technisches Gebiet

Die Erfindung betrifft eine Bildaufbereitungsvorrichtung zur Unterstützung einer qualitativen und/oder quantitativen Bewertung der Qualität einer Crimpverbindung. Ferner betrifft die Erfindung eine Bildauswertevorrichtung zur qualitativen und/oder quantitativen Bewertung der Qualität einer Crimpverbindung sowie ein Fertigungsfreigabesystem für eine Crimpvorrichtung zur Fertigung einer Crimpverbindung.

### Stand der Technik

Bei der Fertigung von Kabeln ist es erforderlich, insbesondere vor oder bei Abarbeitung eines Fertigungsauftrags, sicherzustellen, dass eine entsprechend hergestellte Crimpverbindung für ein Kabel, beispielsweise ein Datenkabel, fehlerfrei ist.

Zu diesem Zweck wird vor Aufnahme der Fertigung oder während der Fertigung eines Fertigungsauftrags ein sogenanntes Schliffbild der hergestellten Crimpverbindung erzeugt. Hierzu wird die Crimpverbindung typischerweise senkrecht zur Längserstreckungsrichtung der Crimpverbindung geschnitten, geschliffen und der Querschnitt der geschnittenen Crimpverbindung im Hinblick auf bestimmte Qualitätsparameter untersucht. Es handelt sich beim Schliffbild also um ein Querschnittsbild der Crimpverbindung.

Schliffbilder helfen im Rahmen der Entwicklung einer Crimpverbindung bei der Festlegung der Crimpmaße und bei der Überprüfung der Crimpqualität von Crimpwerkzeugen als Teil von Crimpvorrichtungen.

Hierzu erfolgt eine Aufnahme des Querschnitts der Crimpverbindung, typischerweise in digitaler und vergrößerter Form, beispielsweise mittels eines Mikroskops, um diese auf das Vorliegen von Crimpfehlern zu untersuchen.

Es ist bekannt, für die Auswertung derartiger Querschnittsbilder einer Crimpverbindung klassische Bildauswertealgorithmen einzusetzen, um entsprechende Crimpfehler bzw. Qualitätsparameter der Crimpverbindung bestimmen zu können. Typischerweise werden die Ergebnisse der klassischen Bildauswertealgorithmen manuell überprüft und bei ungenauen Ergebnissen der Bildauswertesoftware manuell korrigiert.

Alternativ erfolgt die Überprüfung der Crimpqualität von Crimpverbindungen gänzlich manuell auf Basis der erfassten Querschnittsbilder der Crimpverbindung.

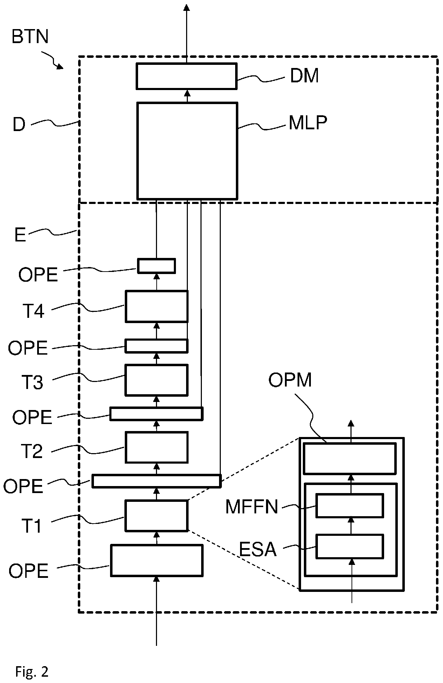

US 2021295487 A1 offenbart ein Beurteilungsverfahren für den Crimpzustand einer Crimpverbindung eines Kabelbaums. Es wird ein Bild eines Teils der Crimpverbindung des Kabelbaums erfasst. Aus diesem werden erste Daten in Zusammenhang mit einer Leerstelle des Teils der Crimpverbindung bestimmt. Aus diesen ersten Daten wird dann ein Crimpzustand des Teils der Crimpverbindung ermittelt. Hierzu kommen insbesondere Querschnittsbilder einer Crimpverbindung zum Einsatz, vgl. Fig 2, Fig 4, Fig 6.

CN 111 665 267 A offenbart ein visuelles Erkennungsverfahren für die Crimpqualität eines Kontaktstücks und löst die Probleme, dass die Crimpqualität eines bestehenden Kontaktkörpers und eines Drahtes nicht visuell und tiefgehend erkannt werden kann und dass Probleme der Crimpqualität oft verborgen bleiben.

EP 3 109 624 A1 offenbart ein Leitungsinspektionssystem. Das Leitungsinspektionssystem umfasst eine Spiegelanordnung mit einer ungeraden Anzahl von Seiten, die so angeordnet sind, dass sie eine pyramidenartige Struktur bilden, welche ein Leitungssegment umgibt. Eine Kamera nimmt eine Vielzahl von Bildern des Leitungssegments auf, die von den Spiegeln reflektiert werden, wobei jedes Bild eine andere Seite des Leitungssegments zeigt.

US 2023 245299 A1 offenbart ein Anschlussinspektionssystem für eine Crimpmaschine. Das Anschlussinspektionssystem umfasst ein Bildverarbeitungsgerät, das einen zu inspizierenden Anschluss erfasst und ein digitales Bild des Anschlusses zu erzeugt. Das Anschlussinspektionssystem umfasst ferner ein Anschlussinspektionsmodul, das mit dem Bildverarbeitungsgerät kommuniziert, um das digitale Bild des Anschlusses als Eingabebild zu empfangen. Das Anschlussinspektionsmodul verfügt über ein Referenzbild. Das Anschlussinspektionsmodul vergleicht das Eingabebild mit dem Referenzbild und führt eine semantische Segmentierung zwischen dem Eingabebild und dem Referenzbild durch, um ein Ausgabebild zu erzeugen. Das Ausgabebild zeigt Unterschiede zwischen dem Eingabebild und dem Referenzbild, um mögliche Defekte zu identifizieren.

EP 2 173 015 A1 offenbart ein Verfahren zur Bestimmung der Qualität einer Crimpverbindung zwischen einem Leiter und einem Kontakt, bei dem zunächst mittels einer Crimpeinrichtung eine Crimpkraft auf den Leiter und den Kontakt ausgeübt wird. Aus der sich während des Crimpens ergebende Crimpkraftkurve wird eine normalisierte Kraft-Weg Crimpkraftkurve abgeleitet und eine Kompressionsfläche ermittelt, die unter einer Referenzcrimpkraftkurve liegt. Die Crimpkraftkurve und die Referenzcrimpkraftkurve werden in mehrere Zonen aufgeteilt, wobei die Aufteilung unter Berücksichtigung der Größe der Kompressionsfläche erfolgt. Eine weitere unter der Crimpkraftkurve liegende Fläche wird ermittelt und verwendetm, um auf die Qualität der Crimpverbindung zu schließen.

US 7 174 324 B2 offenbart ein System, bei welchem Schätzungseinheiten die im Voraus eine Beziehung zwischen bekannten Verbindungsdaten, die zu dem Verbindungsaufbau gehören, und unbekannten Verbindungsdaten, die zu dem Verbindungsaufbau für die bekannten Verbindungsdaten gehören, gelernt haben, die unbekannten Verbindungsdaten für die bekannten Verbindungsdaten gemäß einer Eingabe der bekannten Verbindungsdaten auf der Basis des Lernergebnisses berechnen.

"Deep learning-based automated optical inspection system for crimp connections" von Giang Nguyen Huong et. al. (XP033892793) offenbart ein Computersichtsystem zur Automatisierung der Endkontrolle von Crimpverbindungen. Die Bildverarbeitungskette und das auf tiefem Lernen basierende Modell zur Analyse von Bilddaten von Crimpverbindungen werden in Bezug auf verschiedene Defektklassen beschrieben.

In Bezug auf die erforderliche Dokumentation entsprechender Ergebnisse der Untersuchung der Crimpverbindung im Rahmen der Qualitätssicherung wird diese üblicherweise manuell erstellt und gelegentlich sogar handschriftlich verfasst und in einer dafür vorgesehenen Datenbank abgelegt und archiviert.

Die bisherige Vorgehensweise der Bestimmung der Qualität von Crimpverbindungen ist kostenintensiv, da personalintensiv, und führt aufgrund der manuellen und individuellen Handhabung des Prüfpersonals bei der Bestimmung der Qualitätsparameter, insbesondere quantitativer Qualitätsparameter, der Crimpverbindung häufig zu nicht reproduzierbaren Ergebnissen.

Die manuelle Dokumentation der Auswertung der Schliffbilder erschwert ferner die Rückverfolgbarkeit und Auffindbarkeit von bereits archivierten Ergebnissen der Schliffbildauswertung, da diese in der Regel nicht maschinenlesbar und damit nicht durchsuchbar sind.

### Beschreibung der Erfindung

Es ist Aufgabe der Erfindung, eine Lösung bereitzustellen, mittels welcher die Bestimmung von Qualitätsparametern von Crimpverbindungen robuster und verlässlicher erfolgen kann sowie mittels welcher die Fertigung entsprechender Crimpverbindungen verlässlicher und aufwandsärmer gestaltet werden kann.

Die Aufgabe wird durch die Gegenstände der unabhängigen Ansprüche gelöst. Vorteilhafte Weiterbildungen der Erfindung sind in den abhängigen Ansprüchen, der Beschreibung und den begleitenden Figuren angegeben. Insbesondere können die unabhängigen Ansprüche einer Anspruchskategorie auch analog zu den abhängigen Ansprüchen einer anderen Anspruchskategorie weitergebildet sein. Weitere Ausführungsformen und Weiterbildungen ergeben sich aus den Unteransprüchen sowie aus der Beschreibung unter Bezugnahme auf die Figuren.

Die Erfindung umfasst insbesondere eine Bildaufbereitungsvorrichtung zur Unterstützung einer qualitativen und/oder quantitativen Bewertung der Qualität einer Crimpverbindung, mit einer Empfangseinheit zum Empfangen einer Querschnittsdarstellung eines Bilds, insbesondere ausgebildet als digitale Mikroskopaufnahme im sichtbaren Spektralbereich, einer Crimpverbindung, mit einer Aufbereitungseinheit, welche dazu ausgebildet ist, aus dem empfangenen Bild mittels eines tiefen neuronalen Netzwerks ein Rasterbild des empfangenen Bilds zu erzeugen, indem mittels des trainierten tiefen neuronalen Netzwerks wenigstens die Pixel eines relevanten Bildbereichs des empfangenen Bilds einer vorgegebenen Klasse zuordenbar sind, insbesondere jedes Pixel des empfangenen Bilds einer vorgegebenen Klasse zuordenbar ist. Ferner ist die Aufbereitungseinheit dazu ausgebildet, aus dem erzeugten Rasterbild wenigstens eine Vektorkontur zu erzeugen, und ein Ausgabesignal auf Grundlage der ermittelten Vektorkontur zu erzeugen und auszugeben, aus welchem wenigstens ein der Crimpverbindung zuordenbarer qualitativer und/oder quantitativer Qualitätsparameter ermittelbar ist.

Eine derartige Bildaufbereitungsvorrichtung stellt eine robuste und verlässliche Möglichkeit bereit, das Querschnittsbild der Crimpverbindung derart aufzubereiten, dass eine verlässliche, objektive, reproduzierbare Auswertung des Bilds im Hinblick auf qualitative und/oder quantitative Qualitätsparameter mit hoher Verlässlichkeit erfolgen kann.

Insbesondere ist es mittels einer derartigen Bildaufbereitungsvorrichtung möglich, Mängel während des Bildaufnahmeschritts derart zu handhaben, dass diese sich nicht störend auf eine nachfolgende Bildauswertung auswirken. Zum Beispiel können hierdurch ein ungenau justierter Fokus, eine ungünstige Beleuchtungssituation, Spiegelreflexe auf dem interessierenden Abschnitt des Querschnittsbilds oder Verschmutzungen auf der Schlifffläche, etc. kompensiert werden.

Insbesondere können diese Mängel Verunreinigungen des Querschnitts der Crimpverbindung, Schliffkanten oder ungewöhnliche Grate umfassen, welche dann zu Fehlern bei der Auswertung des Bilds mit klassischen Bildauswertealgorithmen führen können.

Unter klassischen Bildauswertealgorithmen werden Bildauswerteverfahren verstanden, welche eine Bildauswertung unabhängig von maschinell erlernten Modellen durchführen.

Derartige Fehler des Schliffbilds treten insbesondere in produktionsnaher Umgebung auf. Dies führt zu Einschränkungen in der Automatisierbarkeit und Genauigkeit bei der Bestimmung der Qualitätsparameter der Crimpverbindung mit klassischen Bildauswertealgorithmen in fertigungsnaher Umgebung.

Dieser Nachteil kann durch eine entsprechende Bildaufbereitungsvorrichtung beseitigt werden, da diese robust gegen entsprechende Störungen in der Bilderfassung ist und daher eine zuverlässige Automatisierung erst ermöglicht.

Eine derartige Bildaufbereitungsvorrichtung erlaubt daher auch ein kostengünstiges, zuverlässiges und standardisiertes Vorgehen im Hinblick auf eine vorzunehmende Bildauswertung.

Die Zuordnung wenigstens der Pixel eines relevanten Bildbereichs des empfangenen Bilds zu einer vorgegebenen Klasse, insbesondere die Zuordnung jedes Pixels des empfangenen Bilds zu einer vorgegebenen Klasse, kann auch als semantische Segmentierung des empfangenen Bilds bezeichnet werden. Die unterschiedlichen Klassen bilden somit ein semantisch segmentiertes Rasterbild der Crimpverbindung, in der Regel eine schematisierte Darstellung des Querschnitts der Crimpverbindung.

Mittels einer derartigen semantischen Segmentierung zumindest des relevanten Bildbereichs des Querschnittsbilds der Crimpverbindung, insbesondere des gesamten Querschnittsbilds, sind im Ausgangsbild vorhandene Mängel, die sich nachteilig auf eine Auswertung mittels herkömmlicher Auswertealgorithmen auswirken, beseitigbar.

Der relevante Bildbereich ist derjenige Bildbereich des Querschnittsbilds der Crimpverbindung, in welchem die Crimpverbindung abgebildet ist. Die Umgebung in einem vorgebbaren Mindestabstand um die äußere Begrenzung der Crimpverbindung muss nicht zwingend einer Bildaufbereitung und/oder Auswertung unterzogen werden, da diese in der Regel für die Qualitätsparameter der Crimpverbindung nicht relevant ist.

Vorzugsweise wird das Querschnittsbild digital erfasst, beispielsweise mittels einer CCD-Kamera hinter dem Okular eines Mikroskops zur Erzeugung von Bildern in einem für das menschliche Auge sichtbaren Spektralbereich. Vorteilhaft kann es sein, den Aufnahmebereich der Bildaufnahmeeinrichtung derart zu vergrößern, dass der Querschnitt der Crimpverbindung vollständig abgebildet ist und gleichzeitig eine ausreichend hohe Vergrößerung aufweist, um die Struktur des Querschnitts analysieren zu können.

Als Qualitätsparameter kommen sowohl qualitative als auch quantitative Qualitätsparameter in Betracht. Ein qualitativer Qualitätsparameter kann beispielsweise in der Aussage bestehen, ob die Crimpverbindung oder ein bestimmter Qualitätsparameter in Ordnung oder nicht in Ordnung ist, d.h. fehlerbehaftet oder fehlerfrei im Sinne der Fertigungsvorgaben. Als quantitative Qualitätsparameter kommen quantitativ umfassende Größen, welche die Crimpverbindung messbar charakterisieren, z. B. Crimphöhe, Crimpbreite, messbare Crimpbreite, Abstützwinkel, Abstützhöhe, Flankenendenabstand, Abstand Crimpflankenenden, Grathöhe, Gratbreite, Bodendicke, Hohlräume zwischen Litzen, Risse. Ein Qualitätsparameter der Crimpverbindung kann sowohl qualitativ als auch quantitativ ermittelbar sein.

Durch eine entsprechend ausgebildete Bildaufbereitungsvorrichtung wird der Auswertevorgang unterstützt. Der Auswertevorgang kann beispielsweise weiterhin mit klassischen Bildauswertealgorithmen auf Grundlage des aufbereiteten Schliffbilds der Crimpverbindung durchgeführt werden, insbesondere auf Grundlage der wenigstens einen ermittelten Vektorkontur.

Die Bildaufbereitungsvorrichtung umfasst eine Empfangseinheit zum Empfangen eines Querschnittsbildes der Crimpverbindung, insbesondere eines fotografischen Querschnittsbilds der Crimpverbindung in digitaler Form. Dieses Querschnittsbild zeigt vorteilhafterweise, jedoch nicht notwendigerweise, den gesamten Querschnitt der Crimpverbindung, insbesondere in maximaler Größe im Rahmen der genutzten Bildaufnahmeeinrichtung. Das Bild kann insbesondere derart erfasst werden, dass eine in radialer Richtung äußere Grenze der Crimphülse vollständig abgebildet ist.

Die Bildaufnahmeeinrichtung kann optional von der Bildaufbereitungsvorrichtung umfasst sein. Die Bildaufnahmeeinrichtung kann beispielsweise ein Mikroskop sein, welches fertigungsnah installiert ist. Die von der Bildaufnahmeeinrichtung erfassten Querschnittsbilder der Crimpverbindung sind der Empfangseinheit der Bildaufbereitungsvorrichtung zuführbar. Die Bildaufbereitungsvorrichtung ist vorzugsweise in einem Überwachungsbereich angeordnet und mit der Bildaufnahmeeinrichtung verbunden, so dass ein mit der Bildaufnahmeeinrichtung erfasstes Bild der Empfangseinheit zuführbar ist.

Das empfangene Querschnittsbild der Crimpverbindung ist mittels einer Aufbereitungseinheit weiterverarbeitbar, insbesondere aufbereitbar. Die Aufbereitungseinheit umfasst zu diesem Zweck ein trainiertes tiefes neuronales Netzwerk, mit welchem eine semantische Segmentierung des empfangenen Bildes erfolgen kann. D.h. es kann mittels dieses trainierten tiefen neuronalen Netzwerks wenigstens für Pixel des relevanten Bildbereichs, also dem Bereich, welcher den Querschnitt der Crimpverbindung zeigt, insbesondere jedem Pixel des empfangenen Querschnittsbilds der Crimpverbindung, eine Klasse zugeordnet werden.

Insbesondere können mittels einer derartig durchgeführten semantischen Segmentierung die relevanten Bildinhalte des Querschnittsbilds der Crimpverbindung im Hinblick auf die Qualitätsparameter erkannt werden. Dabei sind die Klassen, in welche die Pixel zuordenbar sind, abhängig von den Trainingsdaten und dem Training des tiefen neuronalen Netzwerks.

Es können in diesem Zusammenhang alle tiefen neuronalen Netzwerktopologien herangezogen werden, welche geeignet sind, eine semantische Segmentierung eines Bildes durchzuführen.

Das derart segmentierte Bild kann dann mittels der dazu ausgestalten Aufbereitungseinheit von einem Rasterbild in eine Vektorkontur umgewandelt werden. Eine Vektorkontur ist eine grafisch darstellbare Struktur, die durch mathematische Ausdrücke von Linien, Kurven und Formen definiert ist. Im Gegensatz zu einer Rasteransicht, die aus Pixeln besteht und bei Vergrößerung an Qualität verlieren kann, behalten Vektorgrafiken aufgrund der mathematischen Ausdrücke, die die Beziehung zwischen verschiedenen Punkten, Linien und Kurven der darstellbaren Struktur beschreiben, ihre Klarheit und Qualität bei jeder Größenänderung. Dadurch kann die Genauigkeit für eine nachfolgende Auswertung, insbesondere bei Bestimmung von wenigstens einem Ist-Wert für quantitative Qualitätsparameter, erhöht werden.

Die Umwandlung des Rasterbilds in eine Vektorkontur ist insbesondere im Hinblick auf die Genauigkeit der nachfolgenden Auswertung von Vorteil. Hierdurch ist die nachfolgende Auswertung nicht mehr an die Pixelanzahl des empfangenen Bilds gebunden, wodurch die Genauigkeit hinsichtlich der Bestimmung der Qualitätsparameter, insbesondere der quantitativen Qualitätsparameter, verbessert werden kann. Die Vektorkontur kann beispielsweise flächig und/oder linienförmig ausgestaltet sein.

Die Aufbereitungseinheit ist dazu ausgebildet, auf Grundlage der Vektorkontur ein Ausgabesignal zu erzeugen und auszugeben, anhand dessen der Crimpverbindung zuordenbare Qualitätsparameter, qualitativ und/oder quantitativ, bestimmbar sind. Dies kann insbesondere die erzeugte Vektorkontur selbst sein, welche dann für eine weitere Bildauswertung, beispielsweise mittels klassischer Bildauswertealgorithmen oder auf manueller Grundlage, zur Verfügung steht. Insbesondere kann die Vektorkontur als grafische Darstellung ausgegeben werden.

Die Umwandlung von dem entstehenden Rasterbild mit den mindestens drei Klassen in eine Vektorkontur kann herkömmlich durchgeführt werden, d.h. nicht mittels eines trainierten tiefen neuronalen Netzwerks erfolgen. Dem Fachmann sind hierzu entsprechende Vorgehensweisen bekannt. Entsprechend kann auch ein Ausgabesignal außerhalb des trainierten tiefen neuronalen Netzwerks erzeugt und ausgegeben werden.

Alternativ kann auch das trainierte tiefe neuronale Netzwerk dazu ausgebildet sein, die Vektorkontur aus dem Rasterbild zu erzeugen. Ferner kann das trainierte tiefe neuronale Netzwerk auch dazu ausgebildet sein, das Ausgabesignal zu erzeugen und auszugeben.

Das Ausgabesignal kann derart ausgestaltet sein, dass es durch eine technische Einrichtung, welcher das Ausgabesignal zuführbar ist, verarbeitbar ist. Insbesondere kann das Ausgabesignal derart ausgestaltet sein, dass das Ergebnis der Bildaufbereitung auf einer Bildwiedergabevorrichtung wiedergebbar ist.

Das Ausgabesignal kann jedoch auch derart bereitgestellt werden, dass das Ausgabesignal, aus welchem wenigstens ein qualitativer und/oder quantitativer Qualitätsparameter bestimmbar ist, einer Auswerteeinheit zuführbar ist und mittels der Auswerteeinheit eine automatisierte Bestimmung wenigstens eines qualitativen und/oder quantitativen Qualitätsparameters erfolgen kann.

In einer weiteren Ausführungsform umfasst das trainierte tiefe neuronale Netzwerk ein Bildtransformer-Netzwerk, auch als vision Transformer oder viT bezeichnet, und/oder ein Faltungsnetzwerk, auch als convolutional neural network oder CNN bezeichnet. Hierbei handelt es sich um besonders geeignete tiefe neuronale Netzwerke für die vorgesehene Bildaufbereitung.

Insbesondere kann das trainierte tiefe neuronale Netzwerk als Bildtransformer-Netzwerk ausgebildet sein oder als Faltungsnetzwerks ausgebildet sein. Die Verwendung eines Bildtransformer-Netzwerks ist besonders vorteilhaft, da es einen deutlich geringeren Trainingsaufwand im Vergleich zu anderen geeigneten Netzwerktopologien verursacht. Bildtransformer-Netzwerk sind Encoder-Decoder-Netzwerke, welche geeignet sind Bilder zu klassifizieren.

Das trainierte tiefe neuronale Netzwerk, insbesondere das tiefe Faltungsnetzwerk wird mittels entsprechender Trainingsdatensätze trainiert und zur semantischen Segmentierung eines Querschnittsbilds einer Crimpverbindung ausgebildet.

Im Rahmen eines solchen Trainings können dem trainierbaren neuronalen Netzwerk entsprechende annotierte Trainingsdaten präsentiert werden, welche die gewünschten Klassen aufweisen, welche später durch das trainierte Netzwerk erkannt werden sollen.

Ein solcher Trainingsdatensatz kann zum Beispiel händisch aus historischen, ohnehin vorliegenden Daten erstellt werden, beispielsweise aus fehlerfreien und fehlerbehafteten Schliffbildern vergangener Fertigungsaufträge. Derartige Querschnittsbilder von Crimpverbindungen sind einfach erhältlich, da routinemäßig die Kabelfertigung überwacht wird und daher in gewissen Abständen Schliffbilder angefertigt werden und die Daten über einen längeren Zeitraum, aus Gründen der Qualitätssicherung, verfügbar sind.

Nachfolgend wird das Training eines tiefen neuronalen Faltungsnetzwerks beispielhaft beschrieben. Es versteht sich, dass die beschriebene Erstellung der Trainingsdaten und das Training separate Gegenstände bilden.

Für das Training des tiefen neuronalen Netzwerks wird ein entsprechender Satz an Trainingsbildern erzeugt. Die Bilder umfassen ein Querschnittsbild der Crimpverbindung und eine gewünschte Klassenzuordnung von Pixeln.

Beispielsweise sind alle Pixel, welche einen Innenleiter zeigen einer Klasse zugeordnet, alle Pixel, welche die Crimphülse zeigen, einer weiteren Klasse zugeordnet, und alle Pixel, welche in radialer Richtung außerhalb der Crimphülse liegen einer weiteren zusätzlichen Klasse.

Die Trainingsdaten umfassen hierbei nicht nur fehlerfreie Crimpverbindungen, sondern auch fehlerbehaftete Crimpverbindungen, so dass die Pixel den Klassen unabhängig von ihrer relativen Anordnung auf dem Querschnittsbild zugeordnet werden können.

Die Erfassung entsprechender Bilder und deren Qualifizierung kann im normalen Fertigungsbetrieb bzw. Prüfbetrieb erfolgen, so dass eine Vielzahl von Bildern mit unterschiedlicher Crimpung, Größe, Blickrichtung, Drehung, Kontrast, Beleuchtung, Verdeckung, usw. erzeugt werden können und der in der Regel offline ermittelte Klassen ergänzt werden können. Diese Qualifizierung der Bilder kann per Hand erfolgen oder zumindest teilweise von einem herkömmlichen Bildverarbeitungssystem durchgeführt oder unterstützt werden, wobei eine händische Nacharbeit möglich ist. Die vorab qualifizierten Trainingsbilder können im Anschluss für das Training weiter vorverarbeitet werden.

Beispielsweise kann im Rahmen der weiteren Vorverarbeitung die Größe der Trainingsbilder auf eine vorgegebene Größe angepasst werden. Insbesondere kann die Anzahl der Pixel der Trainingsbilder der Anzahl der Eingänge einer Eingangsschicht des neuronalen Netzwerks angepasst werden. Auch kann die Vorverarbeitung der Trainingsbilder das Normalisieren der Bilder umfassen.

In einer Ausführungsform erfolgt die vorgenannte Aufbereitung und Vorverarbeitung der Bilder nicht, so dass das trainierte neuronale Netzwerk mit entsprechenden Rohdaten umgehen kann, was die spätere Geschwindigkeit der semantischen Segmentierung mittels des trainierten tiefen neuronalen Netzwerks erhöht.

Um die Ergebnisse des neuronalen Netzwerks zu verbessern und robuster zu gestalten, können die Trainingsbilder zufälligen Bildmanipulationen unterzogen werden. Solche Bildmanipulationen können zum Beispiel ein Rotieren, ein Vergrößern, ein Verkleinern und/oder ein Verzerren aufweisen. Es versteht sich, dass entsprechende Größenordnungen für die jeweilige Bildmanipulation vorgegeben werden können.

Beispielsweise kann für das Vergrößern oder Verkleinern eine maximale Vergrößerung bzw. Verkleinerung in Prozent angegeben werden, zum Beispiel 110% oder 90%. Für die Rotation kann zum Beispiel ein maximaler oder minimaler Rotationswinkel, zum Beispiel +/- 10°, 20° oder 30°, angegeben werden. Ebenso können für das Verzerren entsprechende Grenzwerte vorgegeben werden. Es versteht sich, dass unterschiedliche Algorithmen für die Bildverzerrung genutzt werden können, welche unterschiedliche Parameter aufweisen können.

Die Bildmanipulationen dienen dazu, die Trainingsdaten mit einer größeren Variabilität zu versehen. Die vorgesehenen Klassen werden dann folglich an unterschiedlichen Stellen und in unterschiedlicher Größe im Bild vorhanden sein. Damit wird zum Beispiel verhindert, dass das neuronale Netzwerk lernt, das vorgegebene Merkmal nur in einem kleinen Ausschnitt eines Bildes zu identifizieren, und fälschlicherweise den Schluss zieht, das Merkmal sei nicht vorhanden, obwohl es zum Beispiel lediglich außerhalb des Ausschnitts liegt.

Nach der Vorverarbeitung der Trainingsbilder wird das neuronale Netzwerk mit einem Teil der so erhaltenen Trainingsbilder trainiert. Die verbleibenden Trainingsbilder können zur Überprüfung der Lernerfolge genutzt werden, indem sie dem trainierten neuronalen Netzwerk zugeführt werden und dessen Ausgabe mit der für das jeweilige Trainingsbild gekannten bzw. erwarteten Ausgabe verglichen wird. Dieser Teil der Trainingsbilder kann daher auch als Testdaten bezeichnet werden.

Nach Abschluss des Trainings kann die Qualität des Trainings, wie oben bereits erwähnt, mittels einer Qualifikation der Testdaten durch das trainierte neuronale Netzwerk überprüft werden. Erreichen die Ergebnisse die gewünschte Qualität, kann das Training beendet werden. Sollten die Ergebnisse die gewünschte Qualität oder soll das neuronale Netzwerk weitergebildet werden, kann das Training mit entsprechenden Trainingsdaten fortgesetzt oder mit veränderten Parametern erneut durchgeführt werden.

Es versteht sich, dass das Training je nach Typ des genutzten neuronalen Netzwerks unterschiedlich ausgeführt werden kann.

In der Regel werden die Gewichte des neuronalen Netzwerks bei jedem Trainingsdurchlauf angepasst, so dass der Fehler der Ausgabe des neuronalen Netzwerks gegenüber dem bekannten Ergebnis aus dem Trainingsdatensatz minimiert wird. Dies wird üblicherweise durch eine sogenannte Back-Propagation, Fehlerrückführung oder Rückpropagierung erreicht.

Für das Training kann ferner eine sogenannte Epochenanzahl und ein Abbruchkriterium angegeben werden. Die Epochenanzahl gibt die Anzahl der Trainingsdurchläufe an. Dabei kann für jeden Trainingsdurchlauf eine vorgegebene Anzahl der Trainingsdaten, zum Beispiel alle Trainingsdaten oder nur eine Auswahl der Trainingsdaten, genutzt werden. Das Abbruchkriterium gibt an, wie weit das Ergebnis des trainierbaren neuronalen Netzwerks vom idealen Ergebnis abweichen darf, um das Training als erfolgreich abgeschlossen ansehen zu können, und damit das neuronale Netzwerk also ausreichend gut trainiert.

Insbesondere zur Klassifikation von Objektion in Bilddaten liefern Faltungsnetzwerke, insbesondere tiefe Faltungsnetzwerke, auch als deep Convolutional Neural Network bezeichnet, abgekürzt dCNN, gute bis sehr gute Ergebnisse. Es versteht sich, dass auch andere geeignete neuronale Netzwerke aus dem Bereich des maschinellen Lernens möglich sind.

Ein derartiges dCNN kann eine Eingangsschicht sowie eine Vielzahl von versteckten Schichten und eine Ausgangsschicht aufweisen. Die versteckten Schichten können dabei zumindest teilweise identische oder sich wiederholende Schichten aufweisen.

Die Eingangsschicht kann einen Eingang für jeden Pixel der aufgenommenen Bilder aufweisen. Es versteht sich, dass die Bilder zum Beispiel als Array oder Vektor mit der entsprechenden Anzahl an Elementen an die Eingangsschicht übermittelt werden können. Ferner kann die Größe der erfassten Bilder für alle Bilder gleich sein kann. Beispielsweise können die Querschnittsbilder mit 1024*1024 Pixeln aufgenommen werden, welche einen Aufnahmebereich von 2cm mal 2cm, 1cm mal 1cm oder 2,5cm mal 2,5cm erfassen.

Der Aufnahmebereich kann abhängig von der zu analysierenden Crimpverbindung gewählt werden. Der Aufnahmebereich ist vorzugsweise derart gewählt, dass der Querschnitt der Crimpverbindung vollständig erfasst wird.

Es versteht sich, dass diese Angaben lediglich beispielhaft sind und andere Bildparameter verwendet werden können.

Für die semantische Bildsegmentierung gibt es einige einfache convolutional Netzwerk-Architekturen, die als Grundlage für anspruchsvollere Modelle dienen oder für einfachere Anwendungsfälle geeignet sind.

Beispielsweise kann ein sogenanntes Fully Convolutional Network, abgekürzt FCN, verwendet werden, das für die semantische Segmentierung entwickelt wurde. Es besteht aus einer Reihe von Faltungsschichten, die für die Klassifikation von Bildern modifiziert wurde, um Pixel-genaue Ausgaben zu generieren.

Im Gegensatz zu klassischen Convolutional Neural Networks, abgekürzt CNNs, die normalerweise für die Klassifizierung von gesamten Bildern verwendet werden, ersetzt ein FCN die vollständig verbundenen Schichten am Ende des Netzwerks durch faltende Operationen, um eine pixelgenaue Ausgabe zu erzeugen. Das FCN verwendet ferner Upsampling-Operationen, um die Ausgabe auf die ursprüngliche Bildgröße zu skalieren. FCNs sind derart trainierbar, dass Informationen aus verschiedenen Skalierungen integriert werden können, um sowohl kontextuelle als auch detailreiche Informationen für eine genaue Segmentierung zu berücksichtigen. Dies kann durch verschiedene Schichten oder Module erreicht werden, die auf verschiedenen Skalen agieren.

Die Ausgabeschicht eines FCNs generiert eine Wahrscheinlichkeitsverteilung für jede Klasse für jedes Pixel im Eingangsbild. Diese Ausgabe repräsentiert die vorhergesagten Klassen für jedes Pixel und ermöglicht so eine Pixel-genaue Segmentierung.

FCNs sind flexibel einsetzbar und können für verschiedene Größen von Eingabebildern trainiert werden. Sie sind effektiv für die semantische Segmentierung, da sie in der Lage sind, präzise Pixel-zu-Pixel-Zuordnungen für unterschiedliche Klassen oder Objekte in einem Bild zu erzeugen.

Vorteilhafterweise kann zur Durchführung der semantischen Segmentierung des Querschnittsbilds der Crimpverbindung ein Bildtransformer-Netzwerk verwendet werden.

Unter Bildtransformer-Netzwerk werden im Rahmen dieser Anmeldung neuronale Netzwerke verstanden, welche auf der Transformer-Architektur basieren, d.h. einen Encoder, einen Decoder oder beides umfassen. Diese werden häufig auch als Vision Transformer (ViT) bezeichnet. Dies sind Transformer-Netzwerke, welche speziell für die Verarbeitung von Bildern entwickelt wurden.

Ein Bildtransformer-Netzwerk umfasst beispielsweise folgende Komponenten. Zunächst kann das Netzwerk eine Einheit zur Patch-Verarbeitung umfassen, insbesondere eine Einheit zum Patch-Embedding. Unter einem Patch wird ein Teilbild des zu verarbeitenden Bilds verstanden. Die Einheit zur Patch-Verarbeitung teilt das empfangene Bild in Patches, also in Unterbilder bzw. Teilbilder, auf und betrachtet jedes Patch als Token, das als Eingabe für den nachfolgenden Transformer dient. Insbesondere kann ein Vektor-Repräsentation der Eingabedaten vorgesehen werden. Ferner behält die Einheit zur Patch-Verarbeitung die Positionsinformation der Teilbilder bei.

Das Bild bzw. das Teilbild wird also in eine numerische Repräsentation überführt. Diese Patches werden dann als Sequenz von Tokens betrachtet, ähnlich wie Wörter in einem Satz bei der natürlichen Sprachverarbeitung. Üblicherweise überlappen die Patches bzw. Teilbilder, um eine lokale und globale Relation von Bildmerkmalen besser erfassen zu können.

Ferner umfasst das Bildtransformer-Netzwerk in der Regel eine Mehrzahl an Transformer-Blöcken. Diese umfassen sogenannte Aufmerksamkeitsmechanismen, zum Beispiel Selbst-Aufmerksamkeit, Aufmerksamkeitsmatrizen oder Mechanismen zur Beziehungsmodellierung der Token bzw. Patches untereinander. Diese Transformer-Blöcke verarbeiten die Patch-Sequenzen, um globale und lokale Merkmale im Bild zu extrahieren und Beziehungen zwischen den Patches zu modellieren.

Bei der Selbst-Aufmerksamkeit, auch Self-Attention genannt, werden Beziehung zwischen jedem Patch bzw. Token zu anderen Patches bzw. Token zu erfasst und dem Modell zur Verfügung gestellt.

Für jedes Patch bzw. Token berechnet der Aufmerksamkeitsmechanismus eine Gewichtung oder Aufmerksamkeitsverteilung über alle anderen Tokens bzw. Patches im Bild. Diese Gewichtung zeigt an, wie relevant die anderen Teile des Bildes für das aktuelle Token bzw. Patch ist.

Aufmerksamkeitsmatrizen geben wieder, wie jedes Token bzw. jeder Patch auf andere Tokens bzw. Patches reagiert. Diese Aufmerksamkeitsmatrizen geben an, welche Teile des Bildes als wichtiger angesehen werden und welche als unwichtiger.

Durch die Erfassung dieser Beziehungen zwischen den Tokens in Form von Self-Attention und Aufmerksamkeitsmatrizen kann das Modell Kontextinformationen aufnehmen und relevante visuelle Beziehungen innerhalb des Bildes erfassen. Dadurch können sowohl globale als auch lokale Kontextinformationen effektiv verarbeitet werden.

Die Transformer-Blöcke verarbeiten also die Patch-Sequenzen, um globale und lokale Merkmale auf Basis obiger Aufmerksamkeitsmechanismen zu extrahieren und Beziehungen zwischen den Patches zu modellieren. Ferner werden diese Aufmerksamkeitsmechanismen mit Feedforward-Schichten kombiniert, um die Repräsentation der Patches zu aktualisieren und zu verbessern.

Ferner kann ein Bildtransformer-Netzwerk in der Regel dazu ausgebildet sein, die räumliche Positionsinformation des Patches im Bild zu bewahren, zum Beispiel durch Einfügen von Positionscodierungen oder anderer Mechanismen, insbesondere im Bereich des Patch-Embeddings, so dass die mittels des Bildtransformer-Netzwerks bereitgestellten Aussagen positionsrichtig wiedergegeben werden können.

Vorteile eines derartigen Bildtransformer-Netzwerks ist dessen gute Skalierbarkeit, wodurch es auf Bilder unterschiedlicher Größen angewendet werden kann. Das Netzwerk erfordert dahingehend keine festen Eingangsgrößen, wie es bei vielen CNN-basierten Ansätzen der Fall ist. Durch den Transformer-Mechanismus kann das Bildtransformer-Netzwerk globale Kontextinformationen über das gesamte Bild hinweg erfassen und nutzen.

Ferner kann ein Bildtransformer-Netzwerk einfach an verschiedene Aufgaben adaptiert werden und für verschiedene Aufgaben wie Klassifizierung, Objekterkennung, Bildsegmentierung und mehr angepasst werden. Dies kann insbesondere durch ein vom Bildtransformer-Netzwerk umfasstes, dem Encoder nachgeordnetes Multi-Layer-Perzeptron erfolgen.

Insbesondere kann ein Bildtransformer-Netzwerk in zwei Phasen trainiert werden. Zum einen kann ein Vortraining erfolgen auf Grundlage eines großen Datensatzes zur Erlernung der Aufgabe der semantischen Segmentierung. Ferner kann ein Fine-Tuning des Bildtransformer-Netzwerks erfolgen, beispielsweise durch Training mit anwendungsspezifischen Daten durch den Anwender des Bildtransformer-Netzwerks.

Das Bildtransformer-Netzwerk erlaubt ferner eine parallele Verarbeitung von Daten, was die benötigten Ressourcen in Inferenz verringert.

Insbesondere kann ein als SegFormer-Netzwerk ausgebildetes Bildtransformer-Netzwerk zur semantischen Segmentierung der Querschnittsbilder der Crimpverbindung vorgesehen werden. Es können jedoch auch anderen Transformer-Architekturen zur semantischen Segmentierung verwendet werden, wie beispielsweise der Detection Transformer (DETR), der Vision and Language Bidirectional Encoder Representations from Transformers (VilBERT), und weitere.

Das Training eines Bildtransformer-Netzwerks, insbesondere eines SegFormer-Netzwerks, kann analog zu der oben dargestellten Vorgehensweise für ein Training eines CNN erfolgen.

In einer beispielhaften Ausführungsform kann die SegFormer-Architektur wie folgt gewählt werden, um ein robustes und zuverlässiges Resultat im Hinblick auf die Bildaufbereitung zu erzielen. Die nachfolgend beschriebene Architektur ist jedoch lediglich eine mögliche Ausgestaltung und es versteht sich, dass Fachmann hierauf nicht festgelegt ist.

Das SegFormer-Netzwerk als Bildtransformer-Netzwerk umfasst als Transformer-Netzwerk eine Encoder-Seite und eine Decoder-Seite.

Auf der Encoder-Seite können beispielhaft vier in Reihe geschaltete Transformer-Blöcke vorgesehen werden, wobei jedem Transformer-Block eine Einheit zur Patch-Verarbeitung vorgeordnet ist.

Jeder Transformer-Block hat einen Ausgang, über welchen Daten, insbesondere Bilddaten bzw. Repräsentationen von Bilddaten, bereitgestellt werden, die im jeweiligen Transformer-Block verarbeitet wurden. Dabei verarbeitet der erste Transformer-Block der in Reihe geschalteten Transformer-Blöcke das Bild in eher wenigen Patches, d.h. das Ausgangsbild wird in vergleichsweise wenige Patches aufgeteilt, in der Regel überlappend, zum Beispiel 4 Patches (2x2).

Jedes Patch wird innerhalb des Transformer-Blocks gemäß der obigen Aufmerksamkeitsmechanismen prozessiert und einem Feedforward-Netz zugeführt. Daraus werden in einem weiteren Schritt neue Bilddaten zusammengesetzt, zum Beispiel mittels Overlap Patch Merging, und am Ausgang des ersten Transformer-Blocks zur Verfügung gestellt.

Diese Ausgangs-Bilddaten des ersten Transformer-Blocks werden dann der nachfolgenden Einheit zur Patch-Verarbeitung bereitgestellt, welche dann dem nachfolgenden, zweiten Transformer-Block der in Reihe geschalteten Transformer-Blöcke eine höhere Anzahl an, in der Regel überlappenden, Patches, beispielsweise 16 Patches (4x4) bereitstellt. Diesen werden dann im zweiten Transformer-Block prozessiert und am Ausgang des zweiten Transformer-Blocks zur Verfügung gestellt.

Die Bilddaten am Ausgang des zweiten Transformer-Blocks der in Reihe geschalteten vier Transformer-Blöcke werden der nachfolgenden Einheit zur Patch-Verarbeitung bereitgestellt, welche dann dem nachfolgenden, dritten Transformer-Block beispielsweise 64 Patches (8x8), in der Regel überlappend, bereitstellt. Diese werden im dritten Transformer-Block prozessiert und am Ausgang des dritten Transformer-Blocks zur Verfügung gestellt.

Die Bilddaten am Ausgang des dritten Transformer-Blocks der in Reihe geschalteten vier Transformer-Blöcke werden dann der nachfolgenden Einheit zur Patch-Verarbeitung bereitgestellt, welche dann dem nachfolgenden, vierten Transformer-Block beispielsweise 256 Patches (16x16), in der Regel überlappend, bereitstellt, welche im vierten Transformer-Block prozessiert und am Ausgang des vierten Transformer-Blocks zur Verfügung gestellt werden.

Die Bilddaten am Ausgang des vierten Transformer-Blocks werden dann einer nachfolgenden Einheit zur Patch-Verarbeitung bereitgestellt und dann einem Multi-Layer-Perzeptron, abgekürzt MLP, zugeführt. Ferner werden zusätzliche alle Ausgangsdaten jedes Transformer-Blocks, also beispielsgemäß aller vier Transformer-Blocks, dem Multi-Layer-Perzeptron zugeführt.

Ein Multi-Layer-Perzeptron (MLP) bezieht sich auf einen bestimmten Typ von Netzwerkschicht, der in der Architektur des SegFormers verwendet wird. Ein Multi-Layer-Perzeptron ist eine einfache Form eines neuronalen Netzwerks, bestehend aus mindestens drei Schichten, wobei diese in den üblichen Anwendungsfällen in der Regel mehr als drei Schichten umfassen.

Es existiert eine Eingabeschicht, welcher Daten, beispielsweise hier aus den Transformer-Blöcken, zugeführt werden. Diese Schicht repräsentiert die Eingabemerkmale und überträgt sie an die nächste Schicht, die wenigstens eine verdeckte Schicht ist.

In der Regel ist ferner eine Mehrzahl an verdeckten Schichten, jedoch mindestens eine verdeckte Schicht, der Eingabeschicht nachgeordnet. Diese wenigstens eine verdeckte Schicht wird als "verdeckt" bezeichnet, weil sie zwischen der Eingabe- und Ausgabeschicht liegt und nicht direkt von außen sichtbar sind. In einem Multi-Layer-Perzeptron können mehrere verdeckte Schichten, insbesondere eine Vielzahl verdeckter Schichten, vorhanden sein. Durch die mittels des Trainings erstellten Gewichte werden die der wenigstens einen verdeckten Schicht zugeführten Daten in gewünschter Weise verarbeitet.

Ferner existiert eine Ausgabeschicht des Multi-Layer-Perzeptrons, in welche die verarbeiteten Daten ausgegeben und in der Regel im Decoder-Bereich weiterverarbeitet werden.

Der Decoder-Bereich des SegFormer-Netzwerks hat typischerweise die Aufgabe, die ermittelten Zusammenhänge mittels der vorhergehenden Blöcke und Module auf die ursprüngliche Bildgröße hochzuskalieren, auch Upsampling genannt, um möglichst pixelgenaue Segmentierungsergebnisse zu erhalten.

Der Decoder-Bereich umfasst in einem SegFormer hierzu Upsampling-Schichten und entsprechenden Transformationen. Für das Upsampling kann beispielsweise bilineares Upsampling verwendet werden, um die Ergebnisse auf die gewünschte Größe zu skalieren. Dies erzeugt eine glatte Hochskalierung der Vorhersagen.

Der Decoder integriert die Hochskalierung mit lokalen und globalen Informationen, die im Encoder-Bereich durch die Transformer-Blöcke erfasst wurden. Hierbei werden im vorliegenden Beispiel auch Skip-Verbindungen verwendet, um detaillierte Merkmale aus früheren Schichten in die Verarbeitung durch das das Multi-Layer-Perzeptron und den Decoder-Prozess einzubeziehen. Der Decoder kann ferner Aufmerksamkeitsmechanismen umfassen, welche auf die zu verarbeitenden Daten angewendet werden.

Die Ausgabe des Decoders des Bildtransformer-Netzwerks sind die rekonstruierten Segmentierungsmasken, die für jedes Pixel im Bild die vorhergesagte Klasse oder Kategorie repräsentieren.

Der Decoder kann - ebenso wie der Encoder - variabel implementiert werden. Bespiele für die Implementierung des Decoders kann der Fachmann den einschlägigen Plattformen entnehmen, beispielsweise huggingface.co oder github.

Die Funktion des Decoders ist jedoch typischerweise darauf ausgerichtet, die hochskalierten Ergebnisse bzw. Vorhersagen auf die ursprüngliche Bildgröße zu bringen und detaillierte, pixelgenaue Segmentierungsergebnisse zu liefern.

In einer weiteren Ausführungsform ist das tiefe neuronale Netzwerk als Bildtransformer-Netzwerk ausgebildet, wobei das Bildtransformer-Netzwerk ein öffentlich verfügbares vortrainiertes Bildtransformer-Netzwerk umfasst und mindestens eine Netzwerkschicht, insbesondere eine zusätzliche, insbesondere durch den Anwender nachträglich ergänzte, Netzwerkschicht, vorhanden ist, welche, insbesondere nachträglich, mit anwendungsspezifischen Trainingsdaten zur Bildaufbereitung eines Querschnittsbildes einer Crimpverbindung trainiert ist.

Unter anwendungsspezifischen Trainingsdaten werden Daten verstanden, die aus der konkreten Applikation bereitgestellt werden, für welche das Bildtransformer-Netzwerk eingesetzt werden soll, hier also konkret zum Beispiel die Applikation Segmentierung und/oder Auswertung von Querschnittsbildern für Crimpverbindungen. Geeignete vortrainierte Bildtransformer-Netzwerke zur semantischen Segmentierung sind beispielsweise über huggingface.co oder github verfügbar.

Vortrainierte Bildtransformer-Netzwerke haben den Vorteil, dass diese einfach anpassbar sind und nur ein geringer zusätzlicher Trainingsumfang erforderlich ist, um diese im Hinblick auf eine konkrete Aufgabe bzw. Anwendung zu individualisieren. Es ist daher möglich auf öffentlich verfügbare vortrainierte Bildtransformer-Netzwerke zurückzugreifen, und diese aufwandsarm an die konkrete Anwendung nachträglich durch den Anwender anzupassen.

Die nachträgliche Anpassung des vortrainierten Modells an die konkrete Anwendung kann dadurch erfolgen, dass wenigstens eine neue Schicht hinzugefügt wird oder wenigstens eine vorhandene Schicht des Modells mittels entsprechenden Trainings modifiziert wird. Das Training mit den anwendungsspezifischen Daten führt dann zu einer entsprechenden Anpassung des Modells auf Basis der Trainingsdaten, was zu verbesserten Ergebnissen führt.

Zum einen kann eine einfache Anpassung vortrainierter Bildtransformer-Netzwerke im Hinblick auf die konkrete Anwendung von Querschnittsbildern von Crimpverbindungen generell erfolgen.

Ferner kann die Beschaffenheit einer Crimpverbindung von Crimpvorrichtung zu Crimpvorrichtung variieren. Daher können anwendungsspezifische Daten vorliegend crimpvorrichtungsspezifisch oder crimpwerkzeugspezifisch sein. Das heißt, es kann aufgrund des geringen Trainingsaufwands für jede Crimpvorrichtung bzw. jedes Crimpwerkzeug der mittels dieser hergestellten Crimpverbindung ein separates Training des Bildtransformer-Netzwerks erfolgen. Dies stellt ein noch weiter verbessertes Ergebnis im Hinblick auf die Bildaufbereitung bzw. für eine nachfolgende Bildauswertung zur Verfügung.

In einer weiteren vorteilhaften Ausführungsform der Bildaufbereitungsvorrichtung ist das trainierte tiefe neuronale Netzwerk dazu ausgebildet, aus dem empfangenen Bild ein Rasterbild mit mindestens drei Klassen zu erzeugen, wobei eine erste Klasse einem inneren Bauteil der Crimpverbindung, insbesondere einem Leiterelement, entspricht, eine zweite Klasse einem äußeren Bauteil der Crimpverbindung, insbesondere einer Crimphülse, entspricht und eine dritte Klasse der Umgebung der Crimpverbindung entspricht.

Es hat sich gezeigt, dass es für eine robuste und verlässliche Bildaufbereitung bereits ausreichend ist, drei Klassen vorzusehen. Es können jedoch darüber hinaus auch weitere zusätzlichen Klassen im Rahmen der Bildsegmentierung vorgesehen werden.

Die erste Klasse, welche einem inneren Bauteil der Crimpverbindung entspricht, muss nicht notwendigerweise als Leiterelement ausgebildet sein, zum Beispiel in Form von Litzen oder einem festen Innenleiter sein, sondern kann auch eine komplexere Konfiguration sein. Zum Beispiel kann dies bei einem Mantelcrimp die von der Crimphülse umfasste Kabelkonfiguration inklusive Kabelmantel sein.

Die zweite der mindestens drei Klassen kann dem äußeren Bauteil der Crimpverbindung entsprechen. Insbesondere kann diese Klasse so ausgewählt sein, dass diese der Crimphülse der Crimpverbindung entspricht. Es kann sich insbesondere dabei um eine Crimphülse für einen Mantelcrimp oder für einen Innenleitercrimp handeln.

Die dritte der mindestens drei Klassen kann der Umgebung der Crimpverbindung entsprechen. Die Umgebung ist nicht Teil der Crimpverbindung. Die Umgebung kann Luft sein oder andere mechanische Komponenten vorsehen, etwa Komponenten, die der Führung der Crimpverbindung bei der Bildaufnahme dienen oder weitere Strukturen eines Kabels, die für die Analyse nicht betrachtet werden sollen.

Durch das Vorsehen derartiger drei Klassen im Rahmen der Bildaufbereitung kann eine nachfolgende Bildauswertung bereits erheblich verbessert werden. Insbesondere kann durch die genaue Klassifizierung in Innenbauteil der Crimpverbindung, Crimphülse und deren Abgrenzung zur Umgebung eine robuste, verlässliche und genaue Grundlage für eine nachfolgende Auswertung bereitgestellt werden.

Den mindestens drei Klassen können entsprechende, unterschiedliche Werte zugeordnet werden. Dies können insbesondere beliebige, unterscheidbare Wertebereiche sein, wobei ein Wertebereich jeweils einer Klasse zugeordnet ist. Der jeweilige Wertebereich kann auch ein einzelner Wert für eine Klasse sein. Die Zuordnung eines Pixels zu einem entsprechend Wert kann Wahrscheinlichkeits-basiert erfolgen. Es wird einem Pixel derjenige Wert zugeordnet, der diesen mit der größten Wahrscheinlichkeit beschreibt.

In einer Ausführungsform des Bildaufbereitungsvorrichtung ist das trainierte tiefe neuronale Netzwerk dazu ausgebildet, mindestens der ersten, der zweiten und der dritten Klasse jeweils einer Farbe zuzuordnen, wobei im Rasterbild und/oder in der Vektorkontur aneinandergrenzende Klassen als, insbesondere kontrastierende, Farbflächen unterschiedlicher Farben wiedergebbar sind und diese Farbzuordnung vom Ausgabesignal umfasst ist.

Es handelt sich bei dieser Ausführungsform um eine für einen manuellen Auswerter als auch für eine herkömmliche Bildauswertesoftware um eine geeignete Grundlage, um wenigstens einen qualitativen und/oder quantitativen Qualitätsparameter der Crimpverbindung zu bestimmen.

Mittels der unterschiedlichen farblichen Ausgestaltung zumindest der ersten, zweite und dritten Klasse können die Konturen und Ausdehnungen der jeweiligen Bereiche der Crimpverbindung, d.h. zum Beispiel inneres Bauteil, äußeres Bauteil und Umgebung der Crimpverbindung schnell und eindeutig durch einen manuellen Auswerter und/oder eine Bildauswertesoftware erfasst werden, was die Verlässlichkeit einer Auswertung deutlich erhöht.

Besonders einfach ist dies, wenn aneinandergrenzende Klassen Farben aufweisen, welche einen ausreichend guten Kontrast bereitstellen, und damit einfach für die Bildauswertesoftware und/oder den manuellen Auswerter unterscheidbar sind.

Insbesondere können hierdurch jeweils die Grenzkonturen benachbarter Farbbereiche, also die Grenzlinie zwischen erster Klasse und zweiter Klasse bzw. zwischen zweiter und dritter Klasse, gut erkannt werden.

Insbesondere können genau drei Klassen vorgesehen werden, welche die erste, zweite und dritte Klasse umfassen.

Das Ausgabesignal kann derart ausgestaltet sein, dass das Querschnittsbild der Crimpverbindung als 3-Farbenbild mit unterschiedlichen Farben wiedergebbar ist. Es handelt sich hierbei um eine besonders einfache und übersichtliche Darstellung des Querschnittsbilds der Crimpverbindung, um deren Qualitätsparameter manuell oder mit Hilfe einer Bildauswertesoftware verlässlich beurteilen zu können.

In einer weiteren vorteilhaften Ausführungsform ist das trainierte tiefe neuronale Netzwerk dazu ausgebildet, die Grenzkontur zwischen der ersten Klasse und der zweiten Klassen und/oder der zweiten und der dritten Klasse zu bestimmen. Die Grenzkontur kann insbesondere als Linienzug, insbesondere mit vorgebbarer Dicke, ausgestaltet sein, welche den Grenzbereich aneinandergrenzender Klassen bzw. Farben umfasst bzw. aufweist. Das trainierte tiefe neuronale Netzwerk kann ferner dazu ausgebildet sein, ein Ausgabesignal zu erzeugen, mittels dem die bestimmte Grenzkontur graphisch darstellbar ist.

Beispielsweise kann wenigstens eine Grenzkontur im Rahmen der Auswertung mittels klassischen Bildalgorithmen als Polygonzug approximiert werden und auf diese Grundlage qualitative und/oder quantitative Qualitätsparameter der Crimpverbindung bestimmt werden.

Das Training eines derartigen Netzwerks zur Bestimmung von Grenzkonturen kann beispielsweise mittels Querschnittsbildern von Crimpverbindungen durchgeführt werden, in welche entsprechende Grenzkonturen, zum Beispiel manuell, hinzugefügt wurden. Die Trainingsdaten können in üblicher Weise augmentiert und variiert werden, insbesondere in oben dargelegter Weise, um das Training des Netzwerks zu verbessern.

Die Bildaufbereitungsvorrichtung kann insbesondere dazu ausgestaltet sein, wenigstens einen Punkt der Grenzkontur zu identifizieren, anhand dessen eine Bestimmung eines insbesondere quantitativen Qualitätsparametern erfolgen soll, beispielsweise für die Bestimmung wenigstens eines der folgende Qualitätsparameter: Crimphöhe, Crimpbreite, Messbare Crimpbreite, Abstützwinkel, Abstützhöhe, Flankenendenabstand, Abstand Crimpflankenenden, Grathöhe, Gratbreite, Bodendicke, Hohlräume zwischen Litzen, Risse.

Derartige Punkte werden als Markerpunkte bezeichnet, da sie die Bezugspunkte für eine gegebenenfalls nachfolgende Messung von Qualitätsparametern markieren. Es können auch Markerpunkte vorgesehen werden, welche insbesondere fehlerhafte Strukturen im Querschnittsbild der Crimpverbindung markieren, wie zum Beispiel Hohlräume zwischen Litzen. Derartige Hohlräume wären bei deren Vorliegen beispielsweise im inneren Bereich der Crimpverbindung, entsprechend der ersten Klasse, zu erwarten.

Diese Markerpunkte können somit diejenigen Punkte der Grenzkontur kennzeichnen, welche für die Ermittlung der gewünschten Qualitätsparameter, und damit insbesondere für die quantitative Auswertung des Querschnittsbilds, erforderlich sind.

Die Markerpunkte können beispielsweise mittels einfacher Logikoperationen bestimmt werden, mittels klassischer Bildauswertealgorithmen oder mittels eines dafür trainierten tiefen neuronalen Netzwerks.

Die Grenzkontur, insbesondere der die Grenzkontur darstellende Linienzug, kann vorzugsweise mit dem empfangenen Querschnittsbild der Crimpverbindung überlagert darstellbar sein. Hierdurch wird eine Möglichkeit der Plausibilisierung geschaffen, indem die Grenzkontur im empfangenen Querschnittsbild der Crimpverbindung sichtbar dargestellt wird. Anhand der Grenzkontur kann eine entsprechende Bestimmung quantitativer und qualitativer Qualitätsparameter der Crimpverbindung ermittelt werden. Insbesondere können auch die relevanten Markerpunkte für die jeweiligen Qualitätsparameter der Crimpverbindung dargestellt werden.

In einer weiteren Ausführungsform der Bildaufbereitungsvorrichtung ist das Ausgabesignal dazu ausgebildet ist, eine überlagerte Darstellung auf Grundlage des empfangenen Bildes und der Vektorkontur, insbesondere wenigstens einer Grenzkontur, zu umfassen, wobei die verwendeten Messpunkte für die Bestimmung des jeweiligen Qualitätsparameters als gesondert sichtbare Markerpunkte von der überlagerten Darstellung umfasst sind. Hierdurch ist es besonders einfach möglich, eine Auswertung auf Basis dieser Darstellung durchzuführen. Insbesondere können die Markerpunkte unterscheidbar ausgestaltet sein, zum Beispiel farblich unterschiedlich, so dass diese direkt einem bestimmten, insbesondere quantitativen, Qualitätsparameter zuordenbar sind. Dies erleichtert eine verlässliche und möglichst fehlerfreie Auswertung. Die Markerpunkte können mittels entsprechender Logikoperation anhand der Vektorkontur ermittelt werden.

Der Erfindung umfasst ferner insbesondere eine Bildauswertevorrichtung zur qualitativen und/oder quantitativen Bewertung der Qualität einer Crimpverbindung. Diese umfasst eine Bildaufbereitungsvorrichtung nach einem der Ansprüche 1 bis 6, wobei auf Grundlage der erzeugten Vektorkontur eine Fehlerklassifikation zur Ermittlung vorgegebener qualitativer und/oder quantitativer Qualitätsparameter der Crimpverbindung durchführbar ist, und die Bildauswertevorrichtung dazu ausgebildet ist, ein Auswertungsausgabesignal abhängig von der erfolgten Fehlerklassifikation zu erzeugen und auszugeben, insbesondere welches die erfolgte Fehlerklassifikation zur Ermittlung vorgegebener qualitativer und/oder quantitativer Qualitätsparameter der Crimpverbindung umfasst.

Die Bildauswertevorrichtung dient damit nicht nur der Bildaufbereitung, sondern auch der Bildauswertung des Querschnittsbilds der Crimpverbindung. Dies erlaubt eine verlässliche, objektive und robuste Bestimmung der qualitativen und/oder quantitativen Qualitätsparameter der Crimpverbindung, da eine manuelle Auswertung entfallen kann.

Die Fehlerklassifikation zur Ermittlung vorgegebener qualitativer und/oder quantitativer Qualitätsparameter der Crimpverbindung kann mittels klassischer, nicht auf neuronalen Netzwerken basierender Bildauswertesoftware erfolgen oder in anderer Weise. Insbesondere kann diese mittels einer separaten Auswerteeinheit erfolgen, welcher das Ausgabesignal der Bildaufbereitungsvorrichtung zuführbar ist.

Der Begriff der Fehlerklassifikation ist im Kontext der offenbarten Erfindung breit zu verstehen. Die Fehlerklassifikation betrifft insoweit nicht nur das Vorliegen von Fehlern bei einer Querschnittsdarstellung der Crimpverbindung, sondern auch das Nicht-Vorliegen von Fehlern. Die Fehlerklassifikation kann qualitativer Natur sein, zum Beispiel Crimpverbindung "in Ordnung" oder Crimpverbindung "nicht in Ordnung". Die Fehlerklassifikation kann ferner dazu ausgestaltet sein, unterschiedliche Fehlerbilder qualitativ und/oder quantitativ zu klassifizieren. Hierbei ist auch eine quantitative Bestimmung als klassifizieren zu verstehen. Die Fehlerklassifikation umfasst insbesondere somit die Kategorisierung von qualitativer und quantitativer Qualitätsparameter der als Schliffbild dargestellten Crimpverbindung, sowie die Messung quantitativer Qualitätsparameter, zum Beispiel in Form von Ist-Werten, aus der Vektorkontur.

Einem quantitativen Qualitätsparameter kann im Rahmen der Bildauswertung ein Ist-Wert zugeordnet werden, der als Messwert für den jeweiligen Qualitätsparameters verstanden werden kann. Dieser kann mit einem vorgegebenen Soll-Wert für den jeweiligen Qualitätsparameter verglichen werden.

Zur Ermittlung der Ist-Werte wird der Bildauswertevorrichtung vorteilhafterweise neben dem Querschnittsbild der Crimpverbindung auch ein Referenzmaßstab bereitgestellt, der die Umwandlung von Bildmerkmalen beispielsweise in SI-Einheiten oder andere geeignete Maßstäbe erlaubt, beispielsweise prüfstandspezifische Umrechnungswerte, wie etwa Pixel zu Millimeter. So können diese einfach mit etwaigen Soll-Werten, die zum Beispiel in SI-Einheiten vorgebbar sind, verglichen werden.

In einer vorteilhaften Ausführungsform umfasst die Bildauswertevorrichtung ein trainiertes tiefes neuronalen Netzwerk, mittels welchem die Fehlerklassifikation zur Ermittlung vorgegebener qualitativer und/oder quantitativer Qualitätsparameter der Crimpverbindung durchführbar ist.

Mittels eines trainierten tiefen neuronalen Netzwerks kann die Fehlerklassifikation, insbesondere effizient und zuverlässig, durchgeführt werden. Die Bildauswertevorrichtung kann insbesondere ein separates trainiertes tiefes neuronalen Netz umfassen, welches dazu ausgebildet, die Auswertung auf Grundlage des Ausgabesignals der Bildaufbereitungsvorrichtung vorzunehmen. Damit kann die Bildauswertevorrichtung zum Beispiel zwei separate, hintereinander geschaltete tiefe neuronale Netzwerke umfassen, wobei ein erstes trainiertes tiefes neuronales Netzwerk dazu ausgebildet ist, eine Bildaufbereitung durchzuführen und ein zweites trainiertes tiefes neuronales Netzwerk dazu ausgebildet ist, eine Bildauswertung auf Grundlage des Ausgabesignals der Bildaufbereitung durchzuführen.

Das tiefe neuronale Netzwerk wird in oben dargestellter Weise für die entsprechende Klassifikationsaufgabe mittels Trainingsdaten, welche die entsprechenden Fehlerklassifikationen wiedergeben, trainiert. Die Fehlerklassifikation zur Ermittlung vorgegebener qualitativer und/oder quantitativer Qualitätsparameter der Crimpverbindung kann insbesondere mittels eines trainierten Bildtransformer-Netzwerks erfolgen oder mittels eines trainierten tiefen Faltungsnetzwerks.

In einer weiteren Ausführungsform ist die Bildauswertevorrichtung derart ausgebildet, dass die Bildaufbereitung und die Fehlerklassifikation zur Ermittlung vorgegebener qualitativer und/oder quantitativer Qualitätsparameter der Crimpverbindung mittels eines gemeinsamen tiefen neuronalen Netzwerks durchführbar ist. Die Bildaufbereitung und die Bildauswertung können somit zusammengefasst werden. Die Bildaufbereitung als Grundlage für die Auswertung des Schliffbilds der Crimpverbindung wird mit der Bildauswertung unmittelbar verknüpft.

Dies hat den Vorteil, dass nur ein Trainingsvorgang für die Bildaufbereitung und die nachfolgende Fehlerklassifikation erfolgen muss, wobei gleichzeitig eine robuste, zuverlässige und objektivierbare Auswertung der Qualitätsparameter der Crimpverbindung erfolgt.

Wird ein zur semantischen Segmentierung vortrainiertes Bildtransformer-Netzwerk genutzt, so kann dies einfach im Hinblick auf die Fehlerklassifikation und Bestimmung von Ist-Werten für quantitative Qualitätsparameter erweitert werden.

In einer weiteren Ausführungsform umfasst das Auswertungsausgabesignal wenigstens einen Qualitätsparameter aus der folgenden Gruppe: Fehlerfreiheit der Crimpverbindung, Crimphöhe, Crimpbreite, Messbare Crimpbreite, Abstützwinkel, Abstützhöhe, Flankenendenabstand, Abstand Crimpflankenenden, Grathöhe, Gratbreite, Bodendicke, Hohlräume zwischen Litzen. Insbesondere kann das Auswertungsausgabesignal wenigstens einen Messwert bzw. Ist-Werte für wenigstens einen der vorgenannten Qualitätsparameter umfassen.

Als Grundlage dafür ist eine Fehlerklassifikation wenigstens für eine der Fehlerklassen aus der folgenden Gruppe durchführbar: Fehlerfreiheit der Crimpverbindung, Crimphöhe, Crimpbreite, Messbare Crimpbreite, Abstützwinkel, Abstützhöhe, Flankenendenabstand, Abstand Crimpflankenenden, Grathöhe, Gratbreite, Bodendicke, Hohlräume zwischen Litzen. Mittels derartiger, vorzugsweise aller Qualitätsparameter kann die jeweilige Crimpverbindung, insbesondere vollständig, charakterisiert werden.

Folgenden Qualitätsparameter können quantitativ und qualitativ ermittelt werden: Crimphöhe, Crimpbreite, Messbare Crimpbreite, Abstützwinkel, Abstützhöhe, Flankenendenabstand, Abstand Crimpflankenenden, Grathöhe, Gratbreite, Bodendicke, Hohlräume zwischen Litzen.

In einer weiteren Ausführungsform der Bildauswertevorrichtung ist das Auswertungsausgabesignal dazu ausgebildet, eine überlagerte Darstellung auf Grundlage des empfangenen Bildes und der Vektorkontur, insbesondere wenigstens einer Grenzkontur, zu umfassen, wobei die verwendeten Messpunkte für die Bestimmung des jeweiligen Qualitätsparameters als gesondert kenntlich gemachte, insbesondere gesondert sichtbar gemachte, Markerpunkte von der überlagerten Darstellung umfasst sind.

Unter Markerpunkte werden Markierungen im Bild verstanden, welche bestimmte Punkte im Bild, welche dem jeweiligen Qualitätsparameter zugeordnet sind, kennzeichnen. Insbesondere lassen sich mittels dieser Markierungen, die beispielsweise auf der Kante einer Grenzkontur angeordnet sind, Abstände, zum Beispiel in Pixeln, berechnen. Diese Abstände können mittels einer Umrechnungsskala in Längeneinheiten umgerechnet werden

In den Ausführungsformen mit Bezug zu Markerpunkten als Bezugsgrößen für die Bestimmung Ist-Werten für die Crimp-Verbindung, ist es nicht erforderlich, dass die Markerpunkte auch einen Anwender wahrnehmbar sind. Es ist in der Regel für die Bestimmung von Ist-Werten von Qualitätsparametern der Crimpverbindung ausreichend, wenn diese vorhanden sind und für die Ist-Wert-Bestimmung heranzogen werden können.

Jedoch ist es von Vorteil, wenn die Markerpunkte gesondert kenntlich gemacht sind, so dass ein Betrachter der überlagerten Darstellung die Lage der Markerpunkte schnell und einfach aus dieser entnehmen kann. Dies erlaubt eine schnelle, ggf. stichprobenartige, Überprüfung der automatisierten Auswertung durch Überwachungspersonal. Dies kann insbesondere im Hinblick darauf geschehen, ob die Bildauswertevorrichtung fehlerfrei arbeitet.

Insbesondere können die unterschiedlichen Markerpunkte für unterschiedliche Qualitätsparameter gesondert und unterscheidbar kenntlich gemacht werden. Insbesondere kann das trainierte tiefe neuronale Netz dazu ausgebildet sein, die relevanten Markerpunkte im Bild aufzufinden und zu markieren. Ferner kann das trainierte tiefe neuronale Netz dazu ausgebildet sein, ein Ausgabesignal zu erzeugen, mittels welchem die relevanten Markerpunkte im Bild darstellbar sind.

Es können jeweils voneinander unterscheidbare Markerpunkte verwendet werden für einen oder mehrere der folgenden Qualitätsparameter: Fehlerfreiheit der Crimpverbindung, Crimphöhe, Crimpbreite, Messbare Crimpbreite, Abstützwinkel, Abstützhöhe, Flankenendenabstand, Abstand Crimpflankenenden, Grathöhe, Gratbreite, Bodendicke, Hohlräume zwischen Litzen und Risse. So kann jeder Markerpunkt einfach als Bezugspunkt zu einer zugehörigen Messung zugeordnet werden.

In einer weiteren Ausführungsform ist die Bildauswertevorrichtung dazu ausgebildet, das Auswertungsausgabesignal einer zentralen Datenbank, insbesondere einer Fertigungsdatenbank zuzuführen. Dies kann insbesondere mittels einer von der Bildauswertevorrichtung umfassten Datenschnittstelle erfolgen.

Damit können die ermittelten Qualitätsparameter abgelegt bzw. gespeichert und nachvollziehbar dokumentiert werden. So sind die Ergebnisse der Bildauswertung den jeweils gefertigten Crimpverbindungen automatisiert zuordenbar, dokumentierbar, auffindbar und nachvollziehbar. Durch den Wegfall manueller Erfassungen von qualitativen und/oder quantitativen Qualitätsparametern der Crimpverbindung wird die Konsistenz der gespeicherten Daten gewährleistbar, was wiederum zu einer verbesserten Datenauswertung und -verwaltung beiträgt.

Ferner kann die Bildauswertevorrichtung eine Auswerteeinheit umfassen, in welcher die quantitativ ermittelten Qualitätsparameter mit Soll-Werten für die gefertigte Crimpverbindung verglichen werden. Abhängig vom Ergebnis des Vergleichs kann ein Steuersignal erzeugt werden, welches Einfluss auf die Verwendbarkeit gleichartiger Crimpverbindungen nimmt und/oder die Fertigung weiterer gleichartiger Crimpverbindungen beeinflusst.

Die Soll-Werte können der Bildauswertevorrichtung, insbesondere einer Auswerteeinheit der Bildauswertevorrichtung, mittels einer zentralen Datenbank, insbesondere einer Fertigungsdatenbank, bereitgestellt werden, welche mit der Bildauswertevorrichtung datentechnisch verbunden ist.

In der verbindbaren zentralen Datenbank, insbesondere Fertigungsdatenbank, können die jeweiligen Soll-Werte für die jeweiligen Fertigungsaufträge der Crimpverbindungen hinterlegt sein. Diese Soll-Werte können im Fall der Verbindung mit der Bildauswertevorrichtung abhängig vom jeweiligen Fertigungsauftrag der Bildauswertevorrichtung zu Vergleichszwecken mit den ermittelten Ist-Werten übermittelt oder von dieser angefragt werden oder von der Bildauswertevorrichtung empfangen werden.

Die Erfindung betrifft ebenfalls ein Fertigungsfreigabesystem für eine Crimpvorrichtung, mit einer Bildauswertevorrichtung nach einem der Ansprüche 7 bis 12, mit einer Datenschnittstelle zu einer Datenbank, in welcher Datenbank fertigungsauftragsabhängige Soll-Werte für Crimpverbindungen hinterlegt sind, mit einer Freigabeeinheit, welche dazu ausgebildet ist, nach einem Vergleich zwischen wenigstens einem qualitativen und/oder quantitativen Qualitätsparametern der Crimpverbindung mit einem zugehörigen Soll-Wert eine Freigabe oder eine Verweigerung der Freigabe für eine Fertigung der fehlerklassifizierten Crimpverbindung bereitzustellen.

Der Vergleich findet somit anhand des von der Bildauswertevorrichtung bereitgestellten Auswertungsausgabesignals statt, welches wenigstens einen qualitativen und/oder quantitativen Qualitätsparameter umfasst. Abhängig von diesem Vergleich erfolgt eine Freigabe der Fertigung oder Verweigerung der Freigabe der Fertigung.

In einer weiteren Ausführungsform umfasst das Fertigungsfreigabesystem eine Freigabeeinheit, welche ferner dazu ausgebildet ist, eine Freigabe oder eine Verweigerung der Freigabe einer Auslieferung der klassifizierten Crimpverbindung auf Grundlage des Auswertungsausgabesignals bereitzustellen.

Die Freigabeeinheit ist somit nicht nur dazu ausgebildet eine Fertigung freizugeben, sondern auch eine Auslieferung von Crimpverbindungen freizugeben. Dies kann erforderlich sein, wenn ein Fertigungsfehler erst nachträglich festgestellt wird, zum Beispiel durch entsprechende Stichproben. Insbesondere kann ein Auslieferungsstopp in der zentralen Datenbank vermerkt werden, so dass eine Auslieferung der fehlerbehafteten Crimpverbindung an den Kunden unterbunden wird.

In einer weiteren Ausführungsform umfasst das Fertigungsfreigabesystem eine Datenbank, mittels welcher das Auswertungsausgabesignal umfassend wenigstens einen Qualitätsparameter aus der folgenden Gruppe: Fehlerfreiheit der Crimpverbindung, Crimphöhe, Crimpbreite, Messbare Crimpbreite, Abstützwinkel, Abstützhöhe, Flankenendenabstand, Abstand Crimpflankenenden, Grathöhe, Gratbreite, Bodendicke, Hohlräume zwischen Litzen, Risse, speicherbar ist.

### Kurze Figurenbeschreibung

Nachfolgend werden vorteilhafte Ausführungsbeispiele der Erfindung unter Bezugnahme auf die begleitenden Figuren erläutert. Es zeigen:
- Figur 1: eine schematische Darstellung einer Ausführungsform einer Bildaufbereitungsvorrichtung,
- Figur 2: eine schematische Darstellung des Aufbaus eines beispielshaften, als SegFormer ausgebildeten Bildtransformer-Netzwerks,
- Figur 3: eine schematische Darstellung eines empfangenen Bilds, eines semantisch segmentierten 3-Farben-Rasterbilds und eines überlagerten Bilds aus empfangenem Bild und ermittelten Grenzkonturen, insbesondere erzeugbar mittels einer Bildaufbereitungsvorrichtung nach Figur 1,
- Figur 4: eine schematische Darstellung einer ersten Ausführungsform einer Bildauswertevorrichtung,
- Figur 5: eine schematische Darstellung einer zweiten Ausführungsform einer Bildauswertevorrichtung,
- Figur 6: eine schematische Darstellung eines empfangenen Bilds, eines semantisch segmentierten 3-Farben-Rasterbilds, eines überlagerten Bilds eines überlagerten Bilds aus empfangenem Bild und ermittelter Grenzkontur, und quantitativen Qualitätsparametern, erzeugbar mittels einer Bildauswertevorrichtung nach Figur 4 oder Figur 5,
- Figur 7: eine schematische Ausführungsform einer Ausführungsform einer Fertigungsfreigabevorrichtung, und
- Figur 8: zeigt eine schematische Querschnittansicht einer Crimpverbindung.

Die Figuren sind lediglich schematische Darstellungen und dienen nur der Erläuterung der Erfindung. Gleiche oder gleichwirkende Elemente sind durchgängig mit den gleichen Bezugszeichen versehen.

### Detaillierte Beschreibung

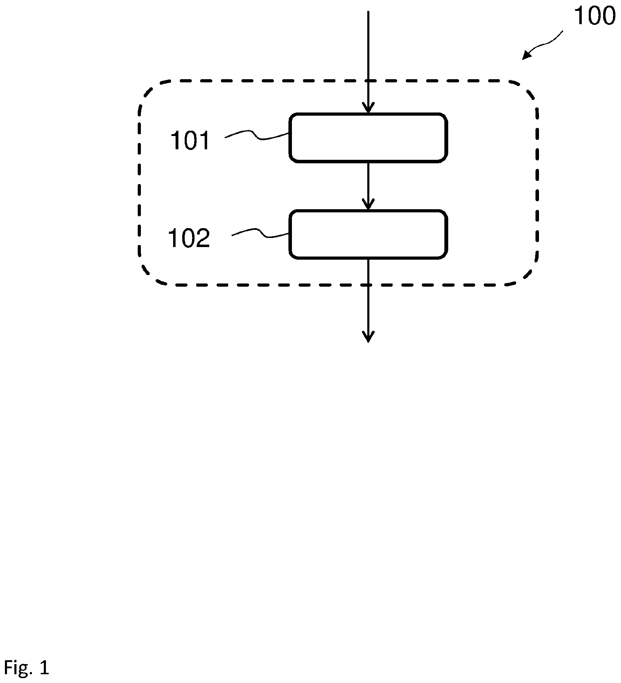

Figur 1 zeigt eine schematische Darstellung einer Bildaufbereitungsvorrichtung 100. Diese umfasst eine Empfangseinheit 101 zum Empfangen eines aufgenommenen Querschnittsbildes einer Crimpverbindung.

Es kann sich hierbei insbesondere um ein digital aufgenommenes Querschnittsbild der Crimpverbindung, insbesondere um eine fotografisches Mikroskopbild des Querschnitts der Crimpverbindung, handeln. Die Ebene des Querschnittsbildes der Crimpverbindung liegt insbesondere senkrecht zu einer Längsmittenachse eines Kabels, an welchem die Crimpverbindung angeordnet ist. Es kann jedoch auch eine andere Querschnittsebene gewählt werden, sofern dies für die Bestimmung von Qualitätsparametern der Crimpverbindung hilfreich erscheint.

Ein derartiges Querschnittsbild der Crimpverbindung wird beispielsweise erzeugt, indem die Crimpverbindung senkrecht zur Längsachse des Kabels geschnitten wird. Das Querschnittsbild wird üblicherweise durch Schleifen aufbereitet. Daher wird ein derartiges Querschnittsbild auch als Schliffbild der Crimpverbindung bezeichnet.

Die Bildaufbereitungsvorrichtung 100 umfasst weiter eine Aufbereitungseinheit 102. Die Aufbereitungseinheit 102 dient der bildlichen Aufbereitung des empfangenen Querschnittsbildes. Durch die Aufbereitung des empfangenen Bilds wird eine verbesserte Auswertung für das Bild ermöglicht, da mittels der Aufbereitung unerwünschte, in der Praxis häufig auftretende Abweichungen von einem Querschnittbild mit idealen Aufnahmebedingungen beseitigt werden können.

Die Aufbereitungseinheit 102 weist zu diesem Zweck ein trainiertes, tiefes neuronales Netzwerk auf, welches als Bildtransformer-Netzwerk ausgebildet ist. Das Bildtransformer-Netzwerk ist dazu trainiert, das Bild in gewünschter Weise aufzubereiten.

Das Bildtransformer-Netzwerk ist insbesondere als SegFormer ausgestaltet und ist dazu ausgebildet, aus dem empfangenen Bild ein semantisch segmentiertes Rasterbild zu erzeugen. Dabei ist jedes Pixel eines interessierenden Bildbereichs des empfangenen Bilds, insbesondere jedes Pixels des empfangenen Bilds, einer vorgegebenen Klasse zuordenbar. Die Zuordnung erfolgt gemäß den Trainingsdaten, in welchen die jeweiligen Klassen durch entsprechende Annotierung festgelegt wurden.

Von Vorteil ist es, ein öffentlich verfügbares vortrainiertes Bildtransformer-Netzwerk zu nutzen, und dies individuell für die Segmentierungsaufgabe von Querschnittsbildern von Crimpverbindungen in Form eines Fine-Tunings, also in Form eines nachfolgenden, auf die konkrete Aufgabe angepassten Trainings, anzupassen. Hierdurch ist der Trainingsaufwand für den Anwender des Bildtransformer-Netzwerks besonders gering. Zu diesem Zweck kann beispielsweise auf einen vortrainierten SegFormer zurückgegriffen werden, welcher dann mittels entsprechend annotierter Trainingsdaten durch den Anwender des vortrainierten Segformer-Netzwerks nachtrainiert wird.

Aus dem mittels SegFormer erzeugten Rasterbild ist mittels der Aufbereitungseinheit 102 eine Vektorkontur erzeugbar. D.h. das erzeugte Rasterbild wird in eine Vektorkontur umgewandelt. Dies erhöht die Genauigkeit für eine nachfolgende Auswertung des aufbereiteten Bilds. Auf dieser Grundlage wird dann mittels der Aufbereitungseinheit 102 ein Ausgabesignal erzeugt, anhand dessen eine nachfolgende verbesserte Auswertung durchgeführt werden kann.

Mittels einer derartigen Bildaufbereitung können Artefakte und Ungenauigkeiten beseitigt werden, wodurch eine Störung der Auswertung durch derartige Artefakte und Ungenauigkeiten vermieden werden kann.

Das Ausgabesignal ist derart beschaffen, es wenigstens einen der Crimpverbindung zuordenbaren qualitativen und/oder quantitativen Qualitätsparameter derart umfasst, dass dieser aus dem Ausgabesignal bestimmbar ist. Dieser wenigstens eine Qualitätsparameter kann dann mittels einer klassischen Bildauswertesoftware und/oder manuell bestimmt werden.

In einer ersten Variante kann die Umwandlung der erzeugten Rasterbilder in eine Vektorkontur klassisch erfolgen, d.h. ohne Anwendung eines neuronalen Netzwerks. Dies ist beispielsweise möglich mittels bekannter Bildverarbeitungstechniken und Algorithmen. Ein gängiges Verfahren hierfür ist beispielsweise die Anwendung der "Canny Edge Detector" Technik in Kombination mit Hough-Transformationen.

Es ist jedoch auch möglich, nicht nur das Rasterbild mittels des Bildtransformer-Netzwerks erzeugen zu lassen, sondern - nach entsprechendem Training - auch die Vektorkontur selbst, sowie ggf. zusätzlich das entsprechende Ausgabesignal. In diesem Zusammenhang kann das Bildtransformer-Netzwerk ferner ein Residual Netzwerk zur Erzeugung der Vektorkontur aus dem Rasterbild umfassen.

Es können somit nach dem Empfangen des Querschnittsbilds der Crimpverbindung sämtliche Aufbereitungsschritte mittels eines entsprechend trainierten tiefen neuronalen Netzwerks, insbesondere einem Bildtransformer-Netzwerk, durchgeführt werden.

Die mittels des trainierten tiefen neuronalen Netzwerks erzeugbare Rasteransicht umfasst in der Regel Bildbereiche, welche einer bestimmten Klasse zugeordnet sind. Dies kann in einer einfachen Form eine erste Klasse sein, die einem inneren Bereich der Crimpverbindung entspricht, beispielsweise dem Innenleiterbereich. Ferner kann eine zweite Klasse vorgesehen sein, welche der Crimphülse entspricht und eine dritte Klasse, welche der Umgebung der Crimpverbindung entspricht.

Es kann gegebenenfalls auch eine vierte Klasse vorgesehen sein, welcher zum Beispiel Hohlräumen innerhalb der ersten Klasse, d.h. im Bereich des Innenleiters, zugeordnet sind.

Es kann gegebenenfalls auch wenigstens eine weitere Klasse vorgesehen sein, welcher zum Beispiel einem bestimmten Teilbereich des inneren Bauteils, zum Beispiel einzelnen Litzen, oder einem bestimmten Teilbereich des äußeren Bauteils, zum Beispiel einem Grat der Crimphülse, entspricht.

Die entsprechenden Klassen sind in der Regel flächige Bereiche des Querschnittsbilds der Crimpverbindung. Die aus der Rasteransicht ermittelte Vektorkontur kann ebenfalls als flächiger Bereich des Querschnittsbilds ausgebildet sein, welche die ermittelten Klassen wiedergibt.

Die Vektorkontur kann aber auch nur einen Teil des Rasterbilds betreffen, insbesondere wenigstens einen Grenzbereich von aneinandergrenzenden Klassen. Dieser Grenzbereich oder diese Grenzbereiche sind in der Regel von erheblicher Bedeutung für die Bestimmung der quantitativen und/oder qualitativen Qualitätsparameter der Crimpverbindung.

Das von der Bildaufbereitungsvorrichtung bereitgestellte Ausgabesignal kann insbesondere derart beschaffen sein, dass eine graphische Wiedergabe der flächigen und/oder linienzugförmigen Vektorkontur möglich ist.

Die graphische Wiedergabe kann auch - insbesondere bei Darstellung wenigstens einer Grenzkontur - überlagert mit dem empfangenen Querschnittsbild der Crimpverbindung darstellbar sein.

Ferner können Markerpunkte ermittelt werden, welche signifikante Strukturen des Querschnitts der Crimpverbindung markieren, zum Beispiel die Bezugspunkte für die Crimpbreite (mittlere Breite) oder die messbare Crimpbreite (maximale Crimpbreite), etc.

Figur 2 zeigt eine schematische Darstellung eines Aufbaus eines als SegFormer ausgebildeten Bildtransformer-Netzwerks BTN. Ein derartiger Bildtransformer-Netzwerk BTN umfasst einen Encoder-Teil E und einen Decoder-Teil D. In der Regel von erhöhter Bedeutung für die erfolgreiche Bereitstellung einer ausreichend guten semantischen Segmentierung des Querschnittsbilds ist insbesondere der Encoder-Teil E und das zugehörige Multi-Layer-Perzeptron MLP des Bildtransformer-Netzwerks BTN. Der Decoder-Teil D dient unter anderem der Skalierung des Ergebnisses des Encoder-Teils E auf die ursprüngliche Bildgröße, insbesondere Pixelanzahl. Der Decoder-Teil D kann jedoch auch andere oder weitere Funktionalitäten aufweisen.

Dem Encoder-Teil E des Bildtransformer-Netzwerks wird das mittels der Empfangseinheit empfangene Querschnittsbild zugeführt. Dieses ist mittels Overlap Patch Embedding OPE prozessierbar. Beim Overlap Patch Embedding OPE können eine Vielzahl an Teilbereichen des Bildes in mehreren Patches überlappend bereitgestellt werden. Der Überlappungsbereich kann dabei beispielsweise 50% betragen.

Durch die Überlappung werden globale und lokale Kontextinformationen besser erfasst, was zu einer verbesserten Kontextrepräsentation im Hinblick auf die Vorhersage bzw. Segmentierung führt. Ferner wird das Bild bzw. Teilbilder in eine maschinenlesbare Form für die Transformer-Blöcke überführt. Das Overlap Patch Embedding OPE trägt insbesondere dazu bei, Artefakte zu minimieren, die aufgrund der diskreten Natur von Patch-basierten Verarbeitungen auftreten können, indem sie die Kontinuität von Merkmalen, welche sich über benachbarte Patches erstrecken, unterstützt.

Die überlappenden Patches des empfangenen Querschnittsbilds der Crimpverbindung sind einem ersten Transformer-Block T1, beispielsweise in vektorieller Form, zuführbar. Der dargestellte Aufbau des Bildtransformer-Netzwerks BTN umfasst vorliegend vier Transformer-Blöcke T1, T2, T3 und T4, welche jeweils strukturell im Wesentlichen identisch aufgebaut sind und in Reihe geschaltet angeordnet sind. Ferner ist jedoch jedem der Transformer-Blöcke ein Overlap Patch Embedding OPE vorgeordnet.

Jeder der vier Transformer-Blöcke T1, T2, T3, T4 umfasst sogenannte Aufmerksamkeitsmechanismen, zum Beispiel Selbst-Aufmerksamkeit, Aufmerksamkeitsmatrizen oder Mechanismen zur Beziehungsmodellierung der Token bzw. Patches untereinander. Diese Transformer-Blöcke T1, T2, T3, T4 verarbeiten die zugeführten Patch-Sequenzen mittels dieser Aufmerksamkeitsmechanismen, um globale und lokale Merkmale im Bild zu extrahieren und Beziehungen zwischen den Patches zu modellieren.

Hierzu können die vier Transformer-Blöcke T1, T2, T3 und T4 jeweils ein Modul zur Efficient Self-Attention ESA, also zur effizienten Selbstaufmerksamkeit, aufweisen. Diese ist eine spezielle Form der Selbstaufmerksamkeit, welche sich dadurch auszeichnet, dass mittels alternativer Ansätze versucht wird, die Berechnungskomplexität der Self-Attention zu reduzieren.

Es werden hierbei approximative Aufmerksamkeitsmechanismen verwendet und komprimierte Darstellungen, um die Anzahl der zu betrachtenden Elemente zu reduzieren. Es wird also versucht, die Berechnungen zur Self-Attention zu optimieren, ohne dass die Leistung des Modells signifikant reduziert wird.

Die effiziente Selbstaufmerksamkeit ESA erleichtert daher einerseits die Skalierbarkeit des SegFormers auf große Datensätze und komplexere Aufgaben, weshalb dieser einfach für weitere Aufgaben weitergebildet werden kann. Ferner sind die Anforderungen an die Rechenressourcen geringer als bei klassischen Self-Attention-Berechnungen.

Nachdem ein Patch die Berechnungen zur Efficient Self-Attention ESA durchlaufen hat, werden die erzeugten einem Mix-Feed-Forward-Netz MFFN, nachfolgend auch Mix-FFN genannt, zugeführt. Das Mix-FNN MFFN führt Mischoperationen auf Basis der Merkmale des einzelnen Patches aus. Durch das Mix-FNN MFFN wird versucht, die Repräsentationen innerhalb jedes Patches zu verbessern, indem es verschiedene Merkmale oder Informationen kombiniert oder transformiert.

Die Operationen des Mix-FNN MFFN tragen dazu bei, spezifische Merkmale zu betonen oder zu verstärken, die für die semantische Segmentierung von Bildern relevant sind, indem sie diese Merkmale besser hervorheben oder kombinieren.

Anschließend erfolgt ein Overlap Patch Merging, OPM, bei welchem Informationen aus überlappenden verarbeiteten Patches fusioniert bzw. vereint werden, um eine konsistentere und integrativere Repräsentation der Bildinformation zu erreichen. Dies ermöglicht eine verbesserte Integration von lokalen und globalen Kontextinformationen.

Ferner helfen diese Überlappungen Artefakte oder Diskontinuitäten an den Patch-Grenzen zu reduzieren, die sonst auftreten könnten, wenn die Patch-basierte Verarbeitung nicht überlappende Bereiche des Bildes berücksichtigen würde. Overlap Patch Merging OPM unterstützt ferner dabei, Artefakte oder Diskontinuitäten an den Patch-Grenzen zu reduzieren, die sonst auftreten könnten, wenn die Patch-basierte Verarbeitung nicht überlappende Bereiche des Bildes berücksichtigen würde.

Jeder Transformer-Block T1, T2, T3, T4 hat einen Ausgang, über welchen die vom jeweiligen Transformer-Block T1, T2, T3, T4 erzeugten Daten bereitgestellt werden. Diese Daten werden dann jeweils einem weiteren Overlap Patch Embedding OPE zugeführt, welches dann mit veränderter überlappender Patchaufteilung, insbesondere überlappenden, verkleinerten Patches, einem nächsten Transformer-Block, zum Beispiel T2, in maschinenlesbarer Form, bspw. als Vektor, zugeführt wird. In diesem Transformer-Block T2 erfolgen dann strukturell die gleichen Schritte, wie oben beschrieben. Jedoch kann auch jeder Transformer-Block T1, T2, T3 oder T4 unterschiedlich aufgebaut sein.

Auf diese Weise durchlaufen die Daten es empfangenen Querschnittsbilder sukzessive die vier Transformer-Blöcke T1, T2, T3 und T4 mit zwischengeschaltetem Overlap Patch Embedding.

Nicht nur von allen vier Transformer-Blöcken T1, T2, T3, T4 gestaltete Ergebnis wird einem Multi-Layer-Perzeptron, MLP, zugeführt, sondern auch alle Zwischenergebnisse. Es existieren daher sogenannte Shortcuts, auch Skip-Verbindungen genannt, welche von den jeweiligen OPE-Schritten zum Multi-Layer-Perzeptron MLP führen und über welche die entsprechenden Daten dem Multi-Layer-Perzeptron MLP zugeführt werden können.

Das Multi-Layer-Perzeptron MLP ergänzt die Transformationsfunktionen der Transformer-Blöcke T1, T2, T3, T4, indem es eine zusätzliche Ebene der Merkmalsmodellierung und - verarbeitung bietet, die speziell darauf ausgerichtet ist, die Segmentierungsgenauigkeit zu verbessern. Es ermöglicht es dem Modell, Merkmale speziell auf die Anforderungen der Segmentierungsaufgabe anzupassen und sie gezielt zu transformieren, um eine präzisere Segmentierung zu erreichen.

Das Multi-Layer-Perzeptron MLP ist daher auch der Teil des Modells, der durch Ergänzung einer Schicht oder Veränderung einer vorhandenen Schicht durch Nachtraining an die konkrete Segmentierungsaufgabe, hier der Segmentierung der Querschnittsbilder einer Crimpverbindung, anpassbar ist, auch als Fine-Tuning bezeichnet.

Das Multi-Layer-Perzeptron MLP das Bildtransformer-Netzwerk BTN kann derart durch entsprechendes Training weitergebildet werden, dass wenigstens eine Fehlerklassifikation mittels des Bildtransformer-Netzwerk ermittelbar ist. D.h. es kann eine weitergehende Auswertung des Querschnittsbilds der Crimpverbindung erfolgen, welche über die Bildaufbereitung hinausgeht.

Das den Transformer-Blöcken T1, T2, T3, T4 im SegFormer nachgeordnete Multi-Layer-Perzeptron MLP ist wenigstens eine zusätzliche Schicht, die auf die Ausgabe der Transformer-Blöcke T1, T2, T3, T4 angewendet wird, um die Segmentierungsergebnisse zu verbessern und die Modellleistung weiter zu optimieren. Damit ist es möglich, die aus den Transformer-Blöcken T1, T2, T3, T4 stammenden Repräsentationen des Querschnittsbilds der Crimpverbindung weiter zu verfeinern und anzupassen.

Der Decoder D umfasst in der Regel eine Pixelklasse-Dekodierungsschicht, welche die extrahierten Merkmalsrepräsentationen in Pixelklassenvorhersagen umwandelt. Hier erfolgt zum Beispiel eine Zuordnung der einzelnen Pixel zu einer Klasse, zum Beispiel gehört der Pixel zur ersten Klasse, zweiten Klasse oder dritten Klasse. Diese Schicht ist daher von hoher Bedeutung für die Erzeugung der gewünschten Rasteransicht. Dies kann Teil des Multi-Layer-Perzeptrons sein oder separat ausgestaltet werden.

Ferner sind auf Decoder-Seite D in der Regel Upsampling-Operationen und/oder Faltungsschichten vorhanden, um die Merkmalsauflösung zu erhöhen und die Größe der Vorhersagen an die ursprüngliche Eingangsgröße des Bildes anzupassen.

In der Regel liegt auch noch eine Klassifizierungsschicht vor, welche die Wahrscheinlichkeiten oder Labels für jede Pixelklasse in einem Bild prognostiziert, was zur Erzeugung einer vollständigen semantischen Segmentierungskarte bzw. Segmentierungsmaske führt.

Die Dekodierungsschicht, die Upsampling-Schicht und die Klassifizierungsschicht sind zusammenfassend in Figur 2 schematisch als Decoder-Modul DM dargestellt.

Ein derartiges vortrainiertes SegFormer-Netzwerk kann beispielsweise über die Webseite https://huggingface.co/docs/transformers/model_doc/segformer herangezogen werden.

Dieses Modell kann dann im Hinblick auf die konkrete Anwendung der semantischen Segmentierung von Querschnittsbildern von Crimpverbindungen, gegebenenfalls von Crimpverbindungen, welche auf einer bestimmten Crimpvorrichtung gefertigt wurden, angepasst bzw. individualisiert werden.

Mittels eines derartigen Modells kann ein semantisch segmentiertes Rasterbild des Querschnittsbilds des Crimpverbindung bereitgestellt werden.

Es versteht sich, dass der Fachmann auch andere Verfahren zur Durchführung einer semantischen Segmentierung heranziehen kann. Insbesondere kann der Fachmann auch ein tiefes neuronales Faltungsnetzwerk heranziehen, das für die entsprechende Aufgabe trainiert ist.

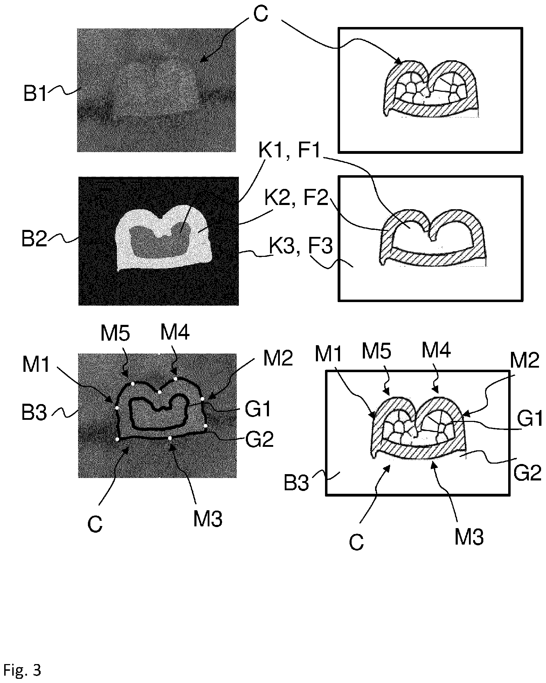

Figur 3 zeigt drei beispielhafte Bilder eines Querschnitts einer Crimpverbindung C jeweils in einer Ansicht als Fotografie und als Strichzeichnung.

Ein erstes Bild B1 zeigt eine Wiedergabe des empfangenen Bilds, welches Gegenstand der Bildaufbereitung mittels einer Bildaufbereitungsvorrichtung, beispielsweise der Bildaufbereitungsvorrichtung gemäß Figur 1, ist.

Das zweite Bild B2 zeigt ein semantisch segmentiertes Rasterbild. Das Rasterbild umfasst eine erste Klasse K1, welche dem Innenleiter entspricht, eine zweite Klasse K2, welche der Crimphülse entspricht und eine dritte Klasse K3, welche der Umgebung der Crimpverbindung entspricht. Jeder Klasse K1, K2, K3 ist in der Fotografie eine unterschiedliche Farbe bzw. Schattierung zugeordnet. Hierdurch wird der relative Verlauf des Grenzbereichs zwischen benachbarten Klassen K1, K2, K3 deutlich.

Die erste Klasse K1 weist eine erste Farbe F1 auf, die zweite Klasse K2 eine zweite Farbe F2 und die dritte Klasse K3 eine dritte Farbe F3. Vorzugsweise weisen unmittelbar benachbarte Farbbereiche ein hohes Kontrastverhältnis auf, so dass diese optisch einfach unterscheidbar sind.

Das zweite Bild B2 ist ferner bereits von einer pixelbasierten Rasteransicht in eine Vektorkontur umgewandelt, um die Genauigkeit einer potenziellen Messung am zweiten Bild B2 zu erhöhen.

Das dritte Bild B3 zeigt das empfangene Bild, welches mit einer ersten Grenzkontur G1 und einer zweiten Grenzkontur G2 überlagert dargestellt ist. Die erste Grenzkontur G1 zeichnet den Grenzverlauf der erste Klasse K1 zur zweiten Klasse K2 nach.

Damit ist bspw. der Innenleiterbereich von der Crimphülse abgrenzbar. Die zweite Grenzkontur G2 zeichnet den Grenzverlauf der zweiten Klasse K2 zur dritten Klasse K3 nach, womit beispielsweise die Crimphülse von der Umgebung der Crimpverbindung abgrenzbar ist.

Die Grenzkonturen G1 und G2 können beispielsweise aus der Vektorkontur des zweiten Bilds B2 ermittelt worden sein.

Ferner weist das dritte Bild B3 eine Mehrzahl an Markerpunkten auf, insbesondere die Markerpunkt M1, M2, M3, M4 und M5, welche für die Bestimmung von quantitativen Qualitätsparametern der Crimpverbindung herangezogen werden können. Die Markerpunkte M1, M2, M3, M4 und M5 können konventionell anhand der Vektorkontur ermittelt werden, beispielsweise durch Logikoperationen oder von einem entsprechend trainierten tiefen neuronalen Netzwerk.

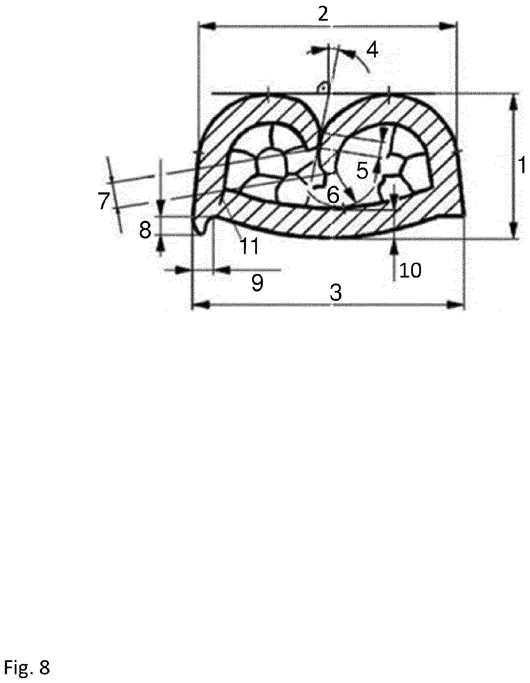

In Bild B3 sind beispielhafte Markerpunkte M1, M2, M3, M4 und M5 und weitere Markerpunkte jeweils durch einen weißen Punkt markiert. Es können jedoch für jeden Markerpunkt M1, M2, M3, M4 und M5 unterschiedliche Farben oder andere Unterscheidungsmerkmale vorgesehen werden. Insbesondere können alle Referenzpunkte mit Markerpunkten M1, M2, M3, M4 und M5 versehen sein, welche zur Bestimmung von quantitativen Qualitätsparametern erforderlich sind, siehe hierzu im Detail Figur 8.

Anhand der Markerpunkte M1 und M2 kann beispielsweise die (mittlere) Crimpbreite ermittelt werden. Mittels der Markerpunkte M3, M4 und M5 kann beispielsweise die Crimphöhe der Crimpverbindung ermittelt werden.

Anhand der jeweiligen Markerpunkte kann eine nachvollziehbare, objektivierte Messung von quantitativen Qualitätsparametern der im Querschnitt aufgenommenen Crimpverbindung C erfolgen.

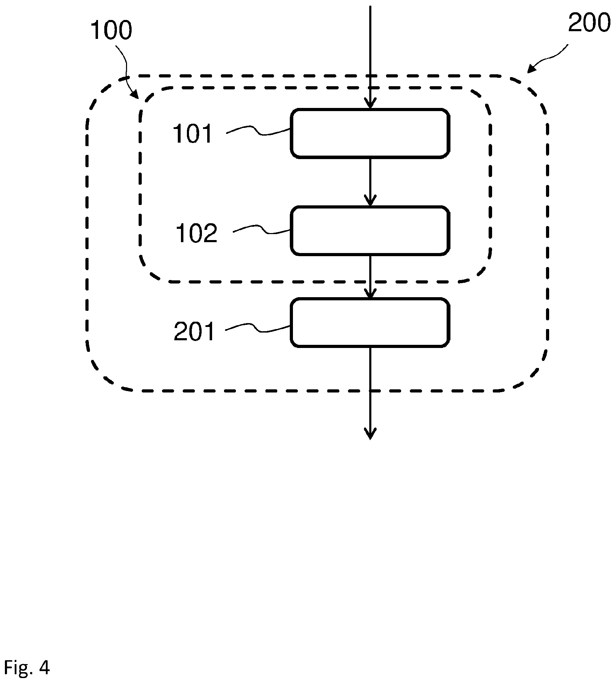

Figur 4 zeigt eine Bildauswertevorrichtung 200, welche eine Bildaufbereitungsvorrichtung 100 gemäß Figur 1 umfasst. Die Ausführungen zur Bildaufbereitungsvorrichtung 100 im Kontext der Figur 1 gelten entsprechend für Figur 4.

Das von der Bildaufbereitungsvorrichtung 100 bereitgestellte Ausgabesignal wird mittels einer Auswerteeinheit 201 der Bildauswertevorrichtung 200 ausgewertet.

Die Auswerteeinheit 201 bestimmt beispielsweise anhand der bereitgestellten Markerpunkte der Vektorkontur die qualitativen und/oder quantitativen Qualitätsparameter, wie etwa Fehlerfreiheit der Crimpverbindung, Crimphöhe, Crimpbreite, Messbare Crimpbreite, Abstützwinkel, Abstützhöhe, Flankenendenabstand, Abstand Crimpflankenenden, Grathöhe, Gratbreite, Bodendicke, Hohlräume zwischen Litzen und/oder Risse. Die Auswerteeinheit 201 kann die Markerpunkte auch selbst bestimmten und nicht von der Bildaufbereitungsvorrichtung erhalten.

Dabei können für quantitative Qualitätsparameter zunächst Maße für die jeweiligen Qualitätsparameter aus der Vektorkontur bestimmt werden. Diese können dann anhand einer entsprechenden Referenz in reale Maßeinheiten, wie Winkelgrade und Längenangaben, beispielsweise in SI-Einheiten, überführt werden.

Insbesondere kann diese Referenz prüfstandsbezogen sein und trägt somit der individuellen Messanordnung für die Erfassung des Querschnittsbilds der Crimpverbindung Rechnung. Das Auswertungsausgabesignal kann insoweit zum Beispiel quantitative Qualitätsparameter umfassen, welche im Rahmen eines späteren Vergleichs evaluiert werden.

Ferner kann jedoch die Auswerteeinheit auch derart ausgestaltet sein, dass diese ein Auswertungsausgabesignal bereitstellt, welches eine Aussage über das Vorliegen oder Nicht-Vorliegen von Fehlern im Hinblick auf die analysierte Crimpverbindung umfasst.

Insbesondere kann anhand qualitativer Qualitätsparameter und/oder durch Vergleich ermittelter quantitativer Qualitätsparameter der Crimpverbindung mit entsprechenden Soll-Werten ermittelt werden, ob die Crimpverbindung "in Ordnung", also im Rahmen der vorgegebenen Toleranzen fehlerfrei ist, oder "nicht in Ordnung" ist, also die vorgegebenen Toleranzen überschreitet.

In einer solchen Ausgestaltung ist die Auswerteeinheit 201 vorteilhafterweise derart ausgebildet, dass diese auf Soll-Werte für vorgegebene Qualitätsparameter zugreifen kann. Insbesondere kann eine in Figur 4 nicht dargestellte Schnittstelle zu einer Datenbank vorgesehen sein, in welcher relevante Fertigungsdaten, zum Beispiel Soll-Werte für bestimmte quantitative Qualitätsparameter, abrufbar hinterlegt sind. Diese können dann durch die Auswerteeinheit 201 für entsprechende Vergleiche mit ermittelten Ist-Werten herangezogen werden. Ferner können die von der Bildauswertevorrichtung 200 ermittelten Ist-Werte der Datenbank zugeführt werden und dort abrufbar gespeichert werden.

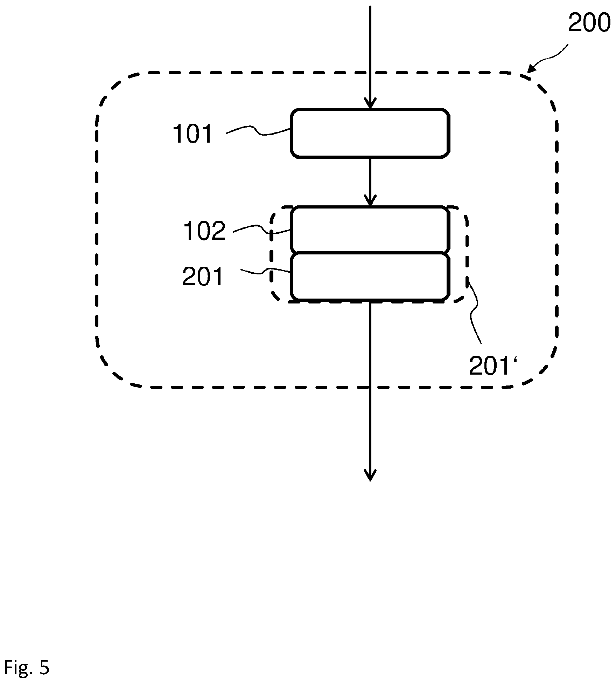

Figur 5 zeigte eine weitere Ausführungsform einer Bildauswertevorrichtung 200. Diese zeichnet sich dadurch aus, dass die Bildaufbereitungseinheit 102 und die Auswerteeinheit 201 in einer Kombinationsbildanalyseeinheit 201' zusammengefasst sind.

Die Kombinationsbildanalyseeinheit 201' ist derart ausgestaltet, dass diese ein trainiertes tiefes neuronales Netzwerk, insbesondere ein Bildtransformer-Netzwerk, umfasst, welches dazu ausgebildet ist, sowohl die Bildaufbereitung als auch die Auswertung durchzuführen.

Hierzu ist das tiefe neuronale Netzwerk entsprechend trainiert, d.h. es erfolgt eine Erzeugung eines Rasterbilds mittels semantischer Segmentierung zumindest des relevanten Bildbereichs des Querschnittsbilds, insbesondere des gesamten Querschnittsbilds der Crimpverbindung. Ferner ist das tiefe neuronale Netzwerk dazu ausgebildet aus dem Rasterbild wenigstens eine Vektorkontur zu erzeugen, sowie auf Grundlage der erzeugten Vektorkontur eine Fehlerklassifikation zur Ermittlung vorgegebener qualitativer und/oder quantitativer Qualitätsparameter der Crimpverbindung durchzuführen.

Darüber hinaus ist das trainierte tiefe neuronale Netzwerk dazu ausgebildet, ein Auswertungsausgabesignal abhängig von der erfolgten Fehlerklassifikation auszugeben, insbesondere derart, dass das Auswertungsausgabesignal die erfolgte Fehlerklassifikation zur Ermittlung vorgegebener qualitativer und/oder quantitativer Qualitätsparameter der Crimpverbindung umfasst.

Ein derartiges trainiertes tiefes neuronales Netzwerk kann den unter Figur 2 dargestellten Aufbau aufweisen, wobei das Multi-Layer-Perzeptron entsprechend trainiert ist, die vorgenannten Aufgaben zu erfüllen. Dem Multi-Layer-Perzeptron können hierzu zusätzliche Schichten hinzugefügt werden, welche anhand fehlerklassifizierter Trainingsdaten trainiert werden.

Sowohl mittels einer beispielhaften Konfiguration einer Bildauswertevorrichtung 200 nach Figur 4 als auch nach Figur 5 kann eine im Wesentlichen fehlerfreie, automatisierte Bestimmung von quantitativen und/oder qualitativen Qualitätsparametern ermöglicht werden, so dass die Messung Eigenschaften einer Crimpverbindung objektivierbar wird.

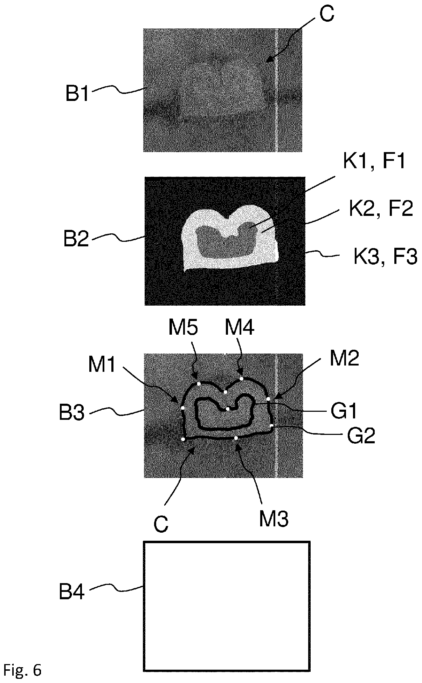

Figur 6 zeigt ein mögliches Ergebnis einer Bildauswertevorrichtung 200. Figur 6 umfasst insoweit die von einer Bildaufbereitungsvorrichtung erzeugte Bilddarstellung der Bilder B1, B2 und B3, insoweit entsprechend Figur 3.

Ferner umfasst jedoch Figur 6 ein viertes Bild B4, welches beispielsweise die mittels des Bildtransformer-Netzwerks ermittelten Ist-Werte der untersuchten Crimpverbindung C wiedergibt und/oder qualitative Qualitätsparameter wie etwa "in Ordnung" oder "nicht in Ordnung".

Insbesondere kann das vierte Bild B4 beispielsweise den nachfolgenden Inhalt aufweisen.

| Schliffbildmaß/quantitativer Qualitätsparameter | Istwert/ Quantität [cm] | Qualität |
|---|---|---|
| Crimphöhe | 0,6641 | In Ordnung |
| Crimpbreite | 1,0002 | In Ordnung |
| Messbare Crimpbreite | 1,0339 | Nicht in Ordnung |
| Abstützwinkel | 3,6285 | In Ordnung |
| Abstützhöhe | 0,1742 | In Ordnung |
| Bodendicke | 0,1164 | In Ordnung |
| Hohlraum zwischen Litzen | vorhanden | Nicht in Ordnung |
| Gesamtergebnis Crimpverbindung | | Nicht in Ordnung |

Die Ist-Werte der vorhergehenden Tabelle sind mittels des trainierten tiefen neuronalen Netzwerks bestimmt, welches ein entsprechendes Auswertungsausgabesignal bereitstellt, welches die entsprechenden Ist-Werte oder Aussagen umfasst.

Die Auswertung kann ferner einen Vergleich umfassen, ob ermittelte Ist-Werte in einem vorgesehenen Toleranzbereich um einen Soll-Wert für den jeweiligen Qualitätsparameter der Crimpverbindung liegen. Die vergleichende Auswertung kann separat von dem trainierten tiefen neuronalen Netz durchgeführt werden, bspw. mittels einer separaten Vergleichseinheit, oder ebenfalls vom trainierten tiefen neuronalen Netz umfasst sein. Diese kann von der Bildauswertevorrichtung umfasst sein.

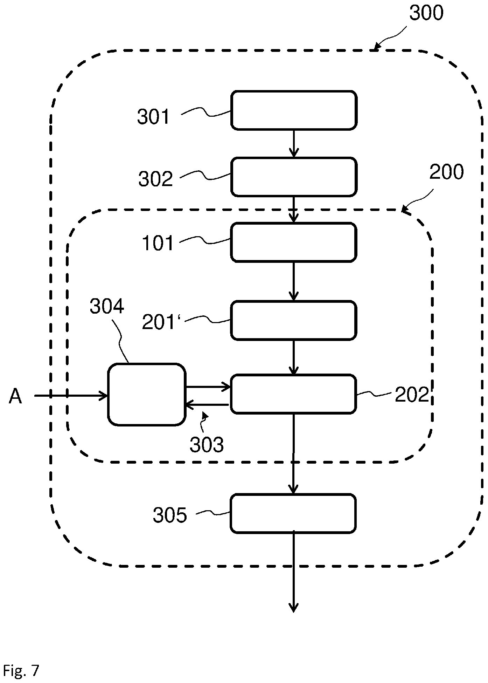

Figur 7 zeigt eine schematische Darstellung eines Fertigungsfreigabesystems 300 für eine Crimpvorrichtung zur Fertigung einer Crimpverbindung.

Das Fertigungsfreigabesystem 300 umfasst in dieser Ausführungsform eine Schneidanlage 301, in welcher ein Querschnitt einer Crimpverbindung erzeugbar ist, indem die Crimpverbindung senkrecht zur Längserstreckungsrichtung des die Crimpverbindung umfassenden Kabels geschnitten und geschliffen wird.

Ferner umfasst das Fertigungsfreigabesystem 300 eine als Mikroskop ausgebildete Bildaufnahmeeinrichtung 302 zur Erfassung eines digitalen Bilds des Querschnitts der Crimpverbindung. Die geschnittene Crimpverbindung wird also dem Mikroskop 302 zugeführt und mittels des Mikroskops 302 bildlich erfasst, insbesondere möglichst genau und ohne Bilderfassungsfehler.

Ferner umfasst das Fertigungsfreigabesystem 300 eine Bildauswertevorrichtung 200. Diese kann beispielsweise gemäß Figur 4 oder Figur 5 ausgebildet sein. Diese umfasst eine Empfangseinheit 101 zum Empfang des Querschnittsbilds der Crimpverbindung.

Ferner umfasst diese eine als Bildtransformer-Netzwerk ausgebildetes trainiertes tiefes neuronales Netz, welches sowohl zur Bildaufbereitung als auch zur Bildauswertung trainiert ist. Dieses ist mittels einer Kombinationsbildanalyseeinheit 201' verfügbar gemacht.

Die Kombinationsbildanalyseeinheit 201' ist derart ausgebildet, dass mittels dieser im Rahmen einer Fehlerklassifikation gewünschte quantitative und qualitative Qualitätsparameter der Crimpverbindung ermittelbar sind. Die quantitativen Qualitätsparameter können insbesondere sein: Crimphöhe, Crimpbreite, Messbare Crimpbreite, Abstützwinkel, Abstützhöhe, Flankenendenabstand, Abstand Crimpflankenenden, Grathöhe, Gratbreite, Bodendicke, Hohlräume zwischen Litzen, Risse.

Es erfolgt mittels der Kombinationsbildanalyseeinheit 201' eine u.a. eine quantitative Ermittlung von Qualitätsparametern der Crimpverbindung, also eine Messung von Abständen und/oder Winkeln anhand des aufgenommen und verarbeiteten Querschnittsbilds der Crimpverbindung.

Im Rahmen der Bestimmung der quantitativen Qualitätsparameter müssen etwaige genutzte Markerpunkte für die quantitative Bestimmung nicht zwingend bildlich darstellbar sein. Jedoch dient eine bildliche Verfügbarkeit der genutzten Markerpunkte der besseren Nachvollziehbarkeit der ermittelten Messwerte.

Die ermittelten quantitativen Qualitätsparameter werden einer Vergleichseinheit 202 zugeführt, welche gemäß Figur 7 von der Bildauswertevorrichtung 200 umfasst ist. Dies ist jedoch nicht zwingend. Die Vergleichseinheit 202 ist mit einer ebenfalls vom Fertigungsfreigabesystem 300 umfassten Fertigungsdatenbank 304 über eine Datenbankschnittstelle 303 verbunden. Die Fertigungsdatenbank 304 kann beispielsweise als Datenbank, z.B. als ERP Datenbank, insbesondere als SAP Datenbank ausgestaltet sein.

Die Fertigungsdatenbank 304 umfasst relevante Fertigungsdaten für einen zu fertigenden Auftrag A und damit auch entsprechende Soll-Werte für eine Crimpverbindung gemäß des zu fertigenden Auftrags A. Es sind somit über die Fertigungsdatenbank 304 Soll-Werte für die gewünschten quantitativen Qualitätsparameter bereitstellbar und an die Vergleichseinheit 202 übermittelbar.

Die Vergleichseinheit 202 vergleicht einerseits die ermittelten quantitativen Qualitätsparameter mit den zugehörigen Soll-Werten. Anhand des Vergleichs ist ersichtlich, ob die gefertigte und analysierte Crimpverbindung fehlerhaft ist oder nicht. Ferner werden der Fertigungsdatenbank 304 die ermittelten quantitativen Qualitätsparameter, d.h. die zugehörigen Ist-Werte, zugeführt und dort hinterlegt.

Mittels der Vergleichseinheit 202 ist einer Freigabeeinheit 305 verbunden. Mittels der Freigabeeinheit 305 ist ermittelbar, ob die Fertigung der Crimpverbindung freigegeben werden soll oder nicht.

Hat der Vergleich ergeben, dass die Crimpverbindung quantitative Qualitätsparameter aufweist, welche innerhalb der Soll-Wert-Toleranzen liegen, so wird die Fertigung der Crimpverbindung freigegeben. Hat der Vergleich ergeben, dass die Crimpverbindung quantitative Qualitätsparameter aufweist, welche nicht innerhalb der Soll-Wert-Toleranzen liegen, so wird die Fertigung der Crimpverbindung nicht freigegeben. Dies kann entsprechend auch für qualitative, d.h. nicht gemessene, Qualitätsparameter erfolgen, wobei eine Freigabe mittels der Freigabeeinheit 305 nicht erteilt wird, wenn ein vorgegebener Qualitätsparameter qualitativ als "nicht in Ordnung" fehlerklassifiziert wird.

Ferner kann die Freigabeeinheit 305 mit dem Auslieferungssystem verbunden sein. Führt eine nachträgliche Analyse eines Querschnittsbilds einer Crimpverbindung zu der Erkenntnis, dass zu erwarten ist, dass ein durchgeführter Fertigungsauftrag fehlerhaft ist, so kann die Freigabeeinheit 305 dazu ausgebildet sein, ein Signal bereitzustellen, mit welchem eine Auslieferung des Fertigungsauftrags an den Kunden gestoppt wird.

Es versteht sich, dass der Fachmann die Funktionalitäten der vorgenannten Einheiten für das Fertigungsfreigabesystem 300 auch anders auf entsprechende Einheiten aufteilen kann oder gegebenenfalls auch mittels einer einzigen technischen Einheit bereitstellen kann.

Figur 8 zeigt eine schematische Querschnittansicht einer Crimpverbindung, anhand welcher die Referenzpunkte für eine Messung quantitativer Qualitätsparameter dargestellt sind.

Das Bezugszeichen 1 verdeutlicht die Referenzpunkte der Crimpverbindung für die Messung der Crimphöhe, Bezugszeichen 2 verdeutlicht die Referenzpunkte der Crimpverbindung für die Messung der Crimpbreite. Bezugszeichen 3 verdeutlicht die Referenzpunkte der Crimpverbindung für die Messung der messbaren Crimpbreite. Bezugszeichen 4 verdeutlicht die Referenzpunkte der Crimpverbindung für die Messung des Abstützwinkels. Bezugszeichen 5 verdeutlicht die Referenzpunkte der Crimpverbindung für die Messung der Abstützhöhe. Bezugszeichen 6 verdeutlicht die Referenzpunkte der Crimpverbindung für die Messung des Flankenendenabstands. Bezugszeichen 7 verdeutlicht die Referenzpunkte der Crimpverbindung für die Messung des Abstands der Crimpflankenenden. Bezugszeichen 8 verdeutlicht die Referenzpunkte der Crimpverbindung für die Messung der Grathöhe. Bezugszeichen 9 verdeutlicht die Referenzpunkte der Crimpverbindung für die Messung der Gratbreite. Bezugszeichen 10 verdeutlicht die Referenzpunkte der Crimpverbindung für die Messung der Bodendicke. Bezugszeichen 11 verdeutlicht die Referenzpunkte der Crimpverbindung für die Messung eines Risses. Nicht dargestellt, aber für den Fachmann mittels seines Fachwissens ohne weiteres möglich, kann beispielsweise anhand von Markerpunkten für Hohlräume eine entsprechende Messung des Hohlraums, gegebenenfalls in mehrere Richtungen, erfolgen. Dies gilt analog für die Bestimmung von Rissen.

Da es sich bei den vorhergehend detailliert beschriebenen Vorrichtungen und Verfahren um Ausführungsbeispiele handelt, können sie in üblicher Weise vom Fachmann in einem weiten Umfang modifiziert werden, ohne den Bereich der Erfindung zu verlassen. Insbesondere sind die mechanischen Anordnungen und die Größenverhältnisse der einzelnen Elemente zueinander lediglich beispielhaft.

### BEZUGSZEICHENLISTE

- 100: Bildaufbereitungsvorrichtung
- 101: Empfangseinheit
- 102: Aufbereitungseinheit

- 200: Bildauswertevorrichtung
- 201: Bildauswerteeinheit
- 201': Bildauswerteinheit mit als Einheit ausgebildeten trainierten tiefen neuronalen Netzwerk zur Bildaufbereitung und zur Bildauswertung: Kombinationsbildanalyseeinheit
- 202: Vergleichseinheit

- 300: Fertigungsfreigabesystem
- 301: Schneideinheit
- 302: Bildaufnahmeeinrichtung
- 303: Datenschnittstelle
- 304: Datenbank
- 305: Freigabeeinheit

- K1: erste Klasse: inneres Bauteil der Crimpverbindung: Leiterelement
- K2: zweite Klasse: äußeres Bauteil der Crimpverbindung: Crimphülse
- K3: dritte Klasse: Umgebung der Crimpverbindung
- B1: empfangenes Querschnittsbild
- B2: Raster-Bild in 3 Farben
- B3: Überlagertes Bild aus empfangenem Bild und Grenzkontur

- F1: Farbe 1
- F2: Farbe 2
- F3: Farbe 3
- G1: Grenzkontur zwischen erster und zweiter Klasse
- G2: Grenzkontur zwischen zweiter und dritter Klasse
- C: Querschnitt der Crimpverbindung
- M1: Markerpunkt 1
- M2: Markerpunkt 2
- M3: Markerpunkt 3
- M4: Markerpunkt 4
- M5: Markerpunkt 5
- A: Auftragsnummer
- T1: Transformer-Block, erster
- T2: Transformer-Block, zweiter
- T3: Transformer-Block, dritter
- T4: Transformer-Block, vierter
- OPE: Overlap Patch Embedding
- MLP: Multi-Layer-Perzeptron
- ESA: Efficient Self Attention
- MFFN: Mix-Feed Forward Network
- OPM: Overlap Patch Merging
- E: Encoder
- D: Decoder
- DM: Decoder Modul
- BTN: Bildtransformer-Netzwerk
- 1: Crimphöhe
- 2: Crimpbreite
- 3: messbare Crimpbreite
- 4: Abstützwinkel
- 5: Abstützhöhe
- 6: Flankenendenabstand
- 7: Abstand Crimpflankenenden
- 8: Grathöhe
- 9: Gratbreite
- 10: Bodendicke
- 11: Riss

## Patentansprüche

1. Bildaufbereitungsvorrichtung (100) zur Unterstützung einer qualitativen und/oder quantitativen Bewertung der Qualität einer Crimpverbindung (C),
- mit einer Empfangseinheit (101) zum Empfangen einer Querschnittsdarstellung eines Bilds, insbesondere ausgebildet als digitale Mikroskopaufnahme im sichtbaren Spektralbereich, einer Crimpverbindung (C),
- mit einer Aufbereitungseinheit (102), welche dazu ausgebildet ist,
aus dem empfangenen Bild mittels eines trainierten tiefen neuronalen Netzwerks ein Rasterbild des empfangenen Bilds zu erzeugen, indem mittels des trainierten tiefen neuronalen Netzwerks wenigstens die Pixel eines relevanten Bildbereichs des empfangenen Bilds einer vorgegebenen Klasse (K1, K2, K3) zuordenbar sind,
aus dem erzeugten Rasterbild wenigstens eine Vektorkontur (G1, G2) zu erzeugen,
ein Ausgabesignal auf Grundlage der ermittelten Vektorkontur (G1, G2) zu erzeugen und auszugeben, aus welchem wenigstens ein der Crimpverbindung (C) zuordenbarer qualitativer und/oder quantitativer Qualitätsparameter (1, 2, 3, 4, 5, 6, 7, 8, 9, 10, 11) ermittelbar ist.

2. Bildaufbereitungsvorrichtung nach Anspruch 1,
wobei das trainierte tiefe neuronale Netzwerk ein Bildtransformer-Netzwerk (BTN) und/oder ein Faltungsnetzwerk umfasst.

3. Bildaufbereitungsvorrichtung nach Anspruch 2,
wobei das tiefe neuronale Netzwerk als Bildtransformer-Netzwerk (BTN) ausgebildet ist, wobei das Bildtransformer-Netzwerk (BTN) ein öffentlich verfügbares vortrainiertes Bildtransformer-Netzwerk (BTN) umfasst sowie mindestens eine Netzwerkschicht, welche, insbesondere nachträglich, mit anwendungsspezifischen Trainingsdaten zur Bildaufbereitung trainiert ist.

4. Bildaufbereitungsvorrichtung nach einem der vorhergehenden Ansprüche,
wobei das trainierte tiefe neuronale Netzwerk dazu ausgebildet ist, aus dem empfangenen Bild ein Rasterbild mit mindestens drei Klassen (K1, K2, K3) zu erzeugen, wobei eine erste Klasse (K1) einem inneren Bauteil der Crimpverbindung (C), insbesondere einem Leiterelement, entspricht, eine zweite Klasse (K2) einem äußeren Bauteil der Crimpverbindung (C), insbesondere einer Crimphülse, entspricht, und eine dritte Klasse (K3) der Umgebung der Crimphülse, insbesondere der Umgebung der Crimpverbindung (C), entspricht.

5. Bildaufbereitungsvorrichtung nach Anspruch 4,
wobei das trainierte tiefe neuronale Netzwerk dazu ausgebildet ist, mindestens der ersten, der zweiten und der dritten Klasse (K1, K2, K3) jeweils eine Farbe (F1, F2, F3) zuzuordnen, wobei im Rasterbild und/oder in der Vektorkontur aneinandergrenzende Klassen (K1, K2, K3) als, insbesondere kontrastierende, Farbflächen unterschiedlicher Farbe (F1, F2, F3) wiedergebbar sind und diese Farbzuordnung vom Ausgabesignal umfasst ist.

6. Bildaufbereitungsvorrichtung nach Anspruch 4 oder 5,
wobei das trainierte tiefe neuronale Netzwerk dazu ausgebildet, eine Grenzkontur (G1, G2) zwischen der ersten Klasse (K1) und der zweiten Klassen (K2) und/oder der zweiten Klasse (K2) und der dritten Klasse (K3) zu bestimmen.

7. Bildauswertevorrichtung (200) zur qualitativen und/oder quantitativen Bewertung der Qualität einer Crimpverbindung (C),
- mit einer Bildaufbereitungsvorrichtung (100) nach einem der vorhergehenden Ansprüche,
- wobei auf Grundlage der erzeugten Vektorkontur eine Fehlerklassifikation zur Ermittlung vorgegebener qualitativer und/oder quantitativer Qualitätsparameter (1, 2, 3, 4, 5, 6, 7, 8, 9, 10, 11) der Crimpverbindung (C) durchführbar ist,
- wobei ein Auswertungsausgabesignal abhängig von der erfolgten Fehlerklassifikation erzeugbar und ausgebbar ist, insbesondere welches die erfolgte Fehlerklassifikation zur Ermittlung vorgegebener qualitativer und/oder quantitativer Qualitätsparameter (1, 2, 3, 4, 5, 6, 7, 8, 9, 10, 11) der Crimpverbindung (C) umfasst.

8. Bildauswertevorrichtung nach Anspruch 7,
umfassend ein trainiertes tiefes neuronales Netzwerk, insbesondere ein trainiertes tiefes Bildtransformer-Netzwerk (BTN), mittels welchem die Fehlerklassifikation zur Ermittlung vorgegebener qualitativer und/oder quantitativer Qualitätsparameter (1, 2, 3, 4, 5, 6, 7, 8, 9, 10, 11) der Crimpverbindung (C) durchführbar ist.

9. Bildauswertevorrichtung nach Anspruch 8,
wobei die Bildaufbereitung und die Fehlerklassifikation zur Ermittlung vorgegebener qualitativer und/oder quantitativer Qualitätsparameter (1, 2, 3, 4, 5, 6, 7, 8, 9, 10, 11) der Crimpverbindung (C) mittels eines gemeinsamen tiefen neuronalen Netzwerks, insbesondere mittels eines Bildtransformer-Netzwerks (BTN), durchführbar ist.

10. Bildauswertevorrichtung nach einem der Ansprüche 7 bis 9,
wobei das Auswertungsausgabesignal wenigstens einen Qualitätsparameter (1, 2, 3, 4, 5, 6, 7, 8, 9, 10, 11) aus der folgenden Gruppe umfasst, insbesondere wenigstens einen Ist-Wert eines Qualitätsparameter (1, 2, 3, 4, 5, 6, 7, 8, 9, 10, 11) aus der folgenden Gruppe umfasst: Fehlerfreiheit der Crimpverbindung, Crimphöhe (1), Crimpbreite (2), Messbare Crimpbreite (3), Abstützwinkel (4), Abstützhöhe (5), Flankenendenabstand (6), Abstand Crimpflankenenden (7), Grathöhe (8), Gratbreite (9), Bodendicke (10), Hohlräume zwischen Litzen, Risse.

11. Bildauswertevorrichtung nach einem der Ansprüche 7 bis 10,
wobei das Auswertungsausgabesignal dazu ausgebildet ist, eine überlagerte Darstellung auf Grundlage des empfangenen Bildes und der Vektorkontur (G1, G2) zu umfassen, wobei die verwendeten Messpunkte für die Bestimmung des jeweiligen Qualitätsparameters als gesondert kenntlich gemachte Markerpunkte (M1, M2, M3, M4, M5) von der überlagerten Darstellung umfasst sind.

12. Bildauswertevorrichtung nach einem der Ansprüche 7 bis 11,
welche dazu ausgebildet ist, das Auswertungsausgabesignal einer Datenbank (304), insbesondere einer Fertigungsdatenbank, zuzuführen.

13. Fertigungsfreigabesystem (300) für eine Crimpvorrichtung,
mit einer Bildauswertevorrichtung (200) nach einem der Ansprüche 7 bis 12,
mit einer Datenschnittstelle (303) zu einer Datenbank (304), in welcher Datenbank (304) fertigungsauftragsabhängige Soll-Werte für Crimpverbindungen (C) hinterlegt sind,
mit einer Freigabeeinheit (305), welche dazu ausgebildet ist, nach einem Vergleich zwischen wenigstens einem qualitativen und/oder quantitativen Qualitätsparameter (1, 2, 3, 4, 5, 6, 7, 8, 9, 10, 11) mit einem zugehörigen Soll-Wert eine Freigabe oder eine Verweigerung der Freigabe für eine Fertigung der fehlerklassifizierten Crimpverbindung (C) bereitzustellen.

14. Fertigungsfreigabesystem nach Anspruch 13,
mit einer Freigabeeinheit (305), welche ferner dazu ausgebildet ist, eine Freigabe oder eine Verweigerung der Freigabe einer Auslieferung der klassifizierten Crimpverbindung (C) auf Grundlage des Auswertungsausgabesignals bereitzustellen.

15. Fertigungsfreigabesystem nach einem der Ansprüche 13 oder 14,
mit einer Datenbank (304), mittels welcher das Ausgabesignal umfassend wenigstens einen Parameter aus der folgenden Gruppe: Fehlerfreiheit der Crimpverbindung, Crimphöhe (1), Crimpbreite (2), Messbare Crimpbreite (3), Abstützwinkel (4), Abstützhöhe (5), Flankenendenabstand (6), Abstand Crimpflankenenden (7), Grathöhe (8), Gratbreite (9), Bodendicke (10), Hohlräume zwischen Litzen, Risse, speicherbar ist.

## Claims

1. Image processing device (100) for supporting qualitative and/or quantitative assessment of the quality of a crimp connection (C),
- having a receiving unit (101) for receiving a cross-sectional representation of an image, in particular in the form of a digital microscope image in the visible spectral range, of a crimp connection (C),
- having a processing unit (102) which is designed to generate a raster image of the received image from the received image by means of a trained deep neural network by virtue of the fact that at least the pixels of a relevant image area of the received image can be assigned to a predefined class (K1, K2, K3) by means of the trained deep neural network,
to generate at least one vector contour (G1, G2) from the generated raster image,
to generate and output an output signal based on the determined vector contour (G1, G2), from which at least one qualitative and/or quantitative quality parameter (1, 2, 3, 4, 5, 6, 7, 8, 9, 10, 11) that can be assigned to the crimp connection (C) can be determined.

2. Image processing device according to Claim 1, wherein the trained deep neural network comprises an image transformer network (BTN) and/or a convolutional network.

3. Image processing device according to Claim 2,
wherein the deep neural network is in the form of an image transformer network (BTN),
wherein the image transformer network (BTN) comprises a publicly available pre-trained image transformer network (BTN) and at least one network layer which is trained, in particular subsequently, with application-specific training data for image processing.

4. Image processing device according to one of the preceding claims,
wherein the trained deep neural network is designed to generate from the received image a raster image having at least three classes (K1, K2, K3), wherein a first class (K1) corresponds to an inner component of the crimp connection (C), in particular a conductor element, a second class (K2) corresponds to an outer component of the crimp connection (C), in particular a crimp sleeve, and a third class (K3) corresponds to the environment of the crimp sleeve, in particular the environment of the crimp connection (C).

5. Image processing device according to Claim 4,
wherein the trained deep neural network is designed to assign a colour (F1, F2, F3) in each case to at least the first, the second and the third class (K1, K2, K3), wherein adjacent classes (K1, K2, K3) in the raster image and/or in the vector contour can be reproduced as, in particular contrasting, colour areas of different colours (F1, F2, F3) and this colour assignment is included in the output signal.

6. Image processing device according to Claim 4 or 5, wherein the trained deep neural network is designed to determine a boundary contour (G1, G2) between the first class (K1) and the second class (K2) and/or the second class (K2) and the third class (K3).

7. Image evaluation device (200) for qualitatively and/or quantitatively assessing the quality of a crimp connection (C),
- having an image processing device (100) according to one of the preceding claims,
- wherein an error classification for determining predefined qualitative and/or quantitative quality parameters (1, 2, 3, 4, 5, 6, 7, 8, 9, 10, 11) of the crimp connection (C) can be carried out on the basis of the vector contour generated,
- wherein an evaluation output signal can be generated and output depending on the error classification carried out, in particular which comprises the error classification carried out for determining predefined qualitative and/or quantitative quality parameters (1, 2, 3, 4, 5, 6, 7, 8, 9, 10, 11) of the crimp connection (C).

8. Image evaluation device according to Claim 7, comprising a trained deep neural network, in particular a trained deep image transformer network (BTN), by means of which the error classification for determining predefined qualitative and/or quantitative quality parameters (1, 2, 3, 4, 5, 6, 7, 8, 9, 10, 11) of the crimp connection (C) can be carried out.

9. Image evaluation device according to Claim 8,
wherein the image processing and the error classification for determining predefined qualitative and/or quantitative quality parameters (1, 2, 3, 4, 5, 6, 7, 8, 9, 10, 11) of the crimp connection (C) can be carried out by means of a common deep neural network, in particular by means of an image transformer network (BTN).

10. Image evaluation device according to one of Claims 7 to 9,
wherein the evaluation output signal comprises at least one quality parameter (1, 2, 3, 4, 5, 6, 7, 8, 9, 10, 11) from the following group, in particular at least one actual value of a quality parameter (1, 2, 3, 4, 5, 6, 7, 8, 9, 10, 11) from the following group: correctness of the crimp connection, crimp height (1), crimp width (2), measurable crimp width (3), support angle (4), support height (5), flank end distance (6), crimp flank end distance (7), burr height (8), burr width (9), base thickness (10), cavities between strands, cracks.

11. Image evaluation device according to one of Claims 7 to 10,
wherein the evaluation output signal is designed to comprise a superimposed representation based on the received image and the vector contour (G1, G2), wherein the measurement points used for determining the respective quality parameter are included in the superimposed representation as separately identified marker points (M1, M2, M3, M4, M5).

12. Image evaluation device according to one of Claims 7 to 11,
which is designed to supply the evaluation output signal to a database (304), in particular a production database.

13. Production release system (300) for a crimping device,
having an image evaluation device (200) according to one of Claims 7 to 12,
having a data interface (303) to a database (304), in which database (304) production order-dependent target values for crimp connections (C) are stored,
having a release unit (305) which is designed, after a comparison between at least one qualitative and/or quantitative quality parameter (1, 2, 3, 4, 5, 6, 7, 8, 9, 10, 11) and an associated target value, to provide a release or a refusal of release for the production of the error-classified crimp connection (C).

14. Production release system according to Claim 13, having a release unit (305) which is further designed to provide a release or a refusal of release for delivery of the classified crimp connection (C) on the basis of the evaluation output signal.

15. Production release system according to either of Claims 13 and 14, having a database (304) that can be used to store the output signal comprising at least one parameter from the following group: correctness of the crimp connection, crimp height (1), crimp width (2), measurable crimp width (3), support angle (4), support height (5), flank end distance (6), crimp flank end distance (7), burr height (8), burr width (9), base thickness (10), cavities between strands, cracks.

## Revendications

1. Dispositif de traitement d'image (100) pour soutenir une évaluation qualitative et/ou quantitative de la qualité d'une liaison sertie (C),
- comportant une unité de réception (101) pour la réception d'une représentation en coupe transversale d'une image d'une liaison sertie (C), en particulier configurée sous forme de prise de vue microscopique numérique dans le domaine spectral visible,
- comportant une unité de traitement (102) qui est conçue pour
générer, à partir de l'image reçue et au moyen d'un réseau neuronal profond entraîné, une image matricielle de l'image reçue, au moins les pixels d'une zone d'image pertinente de l'image reçue pouvant être associés à une classe prédéfinie (K1, K2, K3) au moyen du réseau neuronal profond entraîné,
générer au moins un contour vectoriel (G1, G2) à partir de l'image matricielle générée,
générer et délivrer, sur la base du contour vectoriel (G1, G2) déterminé, un signal de sortie à partir duquel peut être déterminé au moins un paramètre de qualité (1, 2, 3, 4, 5, 6, 7, 8, 9, 10, 11) qualitatif et/ou quantitatif pouvant être associé à la liaison sertie (C).

2. Dispositif de traitement d'image selon la revendication 1,
dans lequel le réseau neuronal profond entraîné comprend un réseau de transformateur d'image (BTN) et/ou un réseau convolutif.

3. Dispositif de traitement d'image selon la revendication 2,
dans lequel le réseau neuronal profond est réalisé sous forme de réseau transformateur d'image (BTN),
le réseau transformateur d'image (BTN) comprenant un réseau transformateur d'image (BTN) pré-entraîné publiquement disponible ainsi qu'au moins une couche de réseau qui est entraînée, en particulier ultérieurement, avec des données d'apprentissage spécifiques à l'application de traitement d'image.

4. Dispositif de traitement d'image selon l'une quelconque des revendications précédentes,
dans lequel le réseau neuronal profond entraîné est conçu pour générer, à partir de l'image reçue, une image matricielle comprenant au moins trois classes (K1, K2, K3), une première classe (K1) correspondant à un composant interne de la liaison sertie (C), en particulier à un élément conducteur, une deuxième classe (K2) correspondant à un composant externe de la liaison sertie (C), en particulier à une cosse de sertissage, et une troisième classe (K3) correspondant à l'environnement de la cosse de sertissage, en particulier à l'environnement de la liaison sertie (C).

5. Dispositif de traitement d'image selon la revendication 4,
dans lequel le réseau neuronal profond entraîné est conçu pour associer respectivement une couleur (F1, F2, F3) à au moins la première, la deuxième et la troisième classe (K1, K2, K3), les classes (K1, K2, K3) adjacentes dans l'image matricielle et/ou dans le contour vectoriel pouvant être représentées sous forme de zones colorées (F1, F2, F3), en particulier contrastées, et cette association de couleur étant comprise dans le signal de sortie.

6. Dispositif de traitement d'image selon la revendication 4 ou 5,
dans lequel le réseau neuronal profond entraîné est conçu pour déterminer un contour limite (G1, G2) entre la première classe (K1) et les deuxièmes classes (K2) et/ou entre la deuxième classe (K2) et la troisième classe (K3).

7. Dispositif d'évaluation d'image (200) pour l'évaluation qualitative et/ou quantitative de la qualité d'une liaison sertie (C),
- comportant un dispositif de traitement d'image (100) selon l'une quelconque des revendications précédentes,
- une classification d'erreurs pouvant être effectuée sur la base du contour vectoriel généré pour la détermination de paramètres de qualité (1, 2, 3, 4, 5, 6, 7, 8, 9, 10, 11) qualitatifs et/ou quantitatifs prédéfinis de la liaison sertie (C),
- un signal de sortie d'évaluation pouvant être généré et délivré en fonction de la classification d'erreurs effectuée, celui-ci comprenant en particulier la classification d'erreurs effectuée pour la détermination de paramètres de qualité (1, 2, 3, 4, 5, 6, 7, 8, 9, 10, 11) qualitatifs et/ou quantitatifs prédéfinis de la liaison sertie (C).

8. Dispositif d'évaluation d'image selon la revendication 7,
comprenant un réseau neuronal profond entraîné, en particulier un réseau transformateur d'image (BTN) profond entraîné, au moyen duquel la classification d'erreurs pour la détermination de paramètres de qualité (1, 2, 3, 4, 5, 6, 7, 8, 9, 10, 11) qualitatifs et/ou quantitatifs prédéfinis de la liaison sertie (C) peut être effectuée.

9. Dispositif d'évaluation d'image selon la revendication 8,
dans lequel le traitement d'image et la classification d'erreurs pour la détermination de paramètres de qualité (1, 2, 3, 4, 5, 6, 7, 8, 9, 10, 11) qualitatifs et/ou quantitatifs prédéfinis de la liaison sertie (C) peuvent être effectués au moyen d'un réseau neuronal profond commun, en particulier au moyen d'un réseau transformateur d'image (BTN).

10. Dispositif d'évaluation d'image selon l'une quelconque des revendications 7 à 9,
le signal de sortie d'évaluation comprenant au moins un paramètre de qualité (1, 2, 3, 4, 5, 6, 7, 8, 9, 10, 11) issu du groupe suivant et comprenant en particulier au moins une valeur effective d'un paramètre de qualité (1, 2, 3, 4, 5, 6, 7, 8, 9, 10, 11) issu du groupe suivant :
absence de défaut de la liaison sertie, hauteur de sertissage (1), largeur de sertissage (2), largeur de sertissage mesurable (3), angle d'appui (4), hauteur d'appui (5), distance entre les extrémités de flanc (6), distance entre les extrémités de flanc de sertissage (7), hauteur de bavure (8), largeur de bavure (9), épaisseur du fond (10), cavités entre les torons, fissures.

11. Dispositif d'évaluation d'image selon l'une quelconque des revendications 7 à 10,
dans lequel le signal de sortie d'évaluation est conçu pour comprendre une représentation superposée basée sur l'image reçue et sur le contour vectoriel (G1, G2), les points de mesure utilisés pour la détermination du paramètre de qualité respectif étant compris dans la représentation superposée sous forme de points de marquage (M1, M2, M3, M4, M5) identifiés séparément.

12. Dispositif d'évaluation d'image selon l'une quelconque des revendications 7 à 11,
lequel est conçu pour transférer le signal de sortie d'évaluation à une base de données (304), en particulier à une base de données de production.

13. Système de libération de fabrication (300) pour un dispositif de sertissage,
comportant un dispositif d'évaluation d'image (200) selon l'une quelconque des revendications 7 à 12,
comportant une interface de données (303) vers une base de données (304), dans laquelle base de données (304) sont stockées des valeurs de consigne dépendant de l'ordre de fabrication pour des liaisons serties (C),
comportant une unité de libération (305) qui est conçue pour fournir, après une comparaison entre au moins un paramètre de qualité (1, 2, 3, 4, 5, 6, 7, 8, 9, 10, 11) qualitatif et/ou quantitatif et une valeur de consigne associée, une libération ou un refus de libération pour une fabrication de la liaison sertie (C) ayant fait l'objet d'une classification d'erreurs.

14. Système de libération de fabrication selon la revendication 13,
comportant une unité de libération (305) qui est en outre conçue pour fournir une libération ou un refus de libération d'une livraison de la liaison sertie (C) classifiée sur la base du signal de sortie d'évaluation.

15. Système de libération de fabrication selon l'une quelconque des revendications 13 ou 14, comportant une base de données (304) au moyen de laquelle le signal de sortie, comprenant au moins un paramètre issu du groupe suivant, peut être mémorisé : absence de défaut de la liaison sertie, hauteur de sertissage (1), largeur de sertissage (2), largeur de sertissage mesurable (3), angle d'appui (4), hauteur d'appui (5), distance entre les extrémités de flanc (6), distance entre les extrémités de flanc de sertissage (7), hauteur de bavure (8), largeur de bavure (9), épaisseur de fond (10), cavités entre les torons, fissures.
